# EUROPÄISCHE PATENTSCHRIFT

(11) **EP 3 959 079 B1**
(45) Veröffentlichungstag und Bekanntmachung des Hinweises auf die Patenterteilung: **01.05.2024**
(21) Anmeldenummer: 20721535.1
(22) Anmeldetag: 23.04.2020
(51) Int. Cl.: B41J 3/28, B65H 5/00, G06K 13/00

(54) **VORRICHTUNG UND VERFAHREN ZUM PERSONALISIEREN VON DOKUMENTEN**
DEVICE AND METHOD FOR PERSONALIZING DOCUMENTS
DISPOSITIF ET PROCÉDÉ DE PERSONNALISATION DE DOCUMENTS

(30) Priorität: 24.04.2019 DE 102019205872
(43) Veröffentlichungstag der Anmeldung: 02.03.2022
(73) Patentinhaber: MB Automation GmbH & Co. KG, 93426 Roding (DE)
(72) Erfinder: DABROWSKI, Hubert, 09113 Chemnitz (DE); KLEINDIENST, Uwe, 09356 St. Egidien (DE)
(74) Vertreter: Platzöder, Michael Christian
(86) Internationale Anmeldenummer: PCT/EP2020/061341
(87) Internationale Veröffentlichungsnummer: WO 2020/216848

(56) Entgegenhaltungen:
- EP-A2- 1 435 587
- WO-A1-2007/031856
- DE-A1-102006 057 830
- DE-A1-102009 050 909

## Beschreibung

Die vorliegende Erfindung betrifft eine Vorrichtung und ein Verfahren zum Personalisieren von Dokumenten, wie beispielsweise kartenförmigen oder buchförmigen Ausweisdokumenten.

Aus dem Stand der Technik ist eine Vielzahl verschiedener Typen von personalisierten Dokumenten, insbesondere in Kartenform oder Buchform bekannt. So gehören beispielsweise buchartige Passdokumente oder einzelne Seiten davon (z.B. die sog. "Pass-Inhaberseite"), Ausweiskarten und viele Arten von personalisierten Chipkarten, etwa Bankkarten, Kreditkarten, Ausweiskarten, Mitgliedskarten, Zugangsberechtigungskarten usw. oder personenbezogene (meist kartenförmige) Etiketten jeweils zur Gruppe der personalisierten Dokumente.

Dabei bedeutet "Personalisierung" bzw. "personalisiert", dass das entsprechende Dokument eine Information enthält oder trägt, die typischerweise einem Inhaber des Dokuments zugeordnet ist. So kann die Information etwa in einigen Fällen den Inhaber identifizieren, beispielsweise mittels seines Namens, einer Identitätsnummer oder anderer Merkmale, die auf dem Dokument aufgedruckt, anderweitig aufgebracht oder in ihm gespeichert sind. Die Personalisierung kann dabei insbesondere individuell auf eine einzelne Person bezogen sein, oder aber auch auf eine bestimmte begrenzte Gruppe von Personen, beispielsweise Mitarbeiter eines Unternehmens. Das Aufbringen der Personalisierungsinformationen kann dabei insbesondere mittels Druckens, mittels Gravur oder, insbesondere im Falle einer Kunststoffoberfläche, mittels gezielter lokaler Verfärbung des Oberflächenmaterials des Dokuments durch Energieeinwirkung, insbesondere mittels eines geeigneten Lasers erfolgen.

In der Offenlegungsschrift DE 10 2006 031 024 A1 sind eine Druckeinrichtung und ein Verfahren zum Bedrucken von Personalisierungsdokumenten beschrieben. Die Druckeinrichtung umfasst dabei eine Druckeinheit zum Bedrucken eines in einem Druckbereich befindlichen Personalisierungsdokuments und eine Zuführeinheit zum nacheinander Zuführen der Personalisierungsdokumente in den Druckbereich. Die Zuführeinheit weist dabei mehrere verfahrbare Trägereinrichtungen auf, um ein zu bedruckendes Personalisierungsdokument aufzunehmen und in den Druckbereich und aus dem Druckbereich zu verfahren. Die Vorrichtung weist zudem eine Antriebseinrichtung auf, um die Trägereinrichtungen entlang einer Zuführungsrichtung auf verschiedenen senkrecht zur Zuführungsrichtung angeordneten Ebenen zu verfahren. Sie weist des Weiteren eine Steuereinheit zum Ansteuern der Antriebsvorrichtung auf, sodass die mehreren Trägereinrichtungen jeweils im Wechsel zwischen einer Aufnahmeposition, in der ein Personalisierungsdokument aufgenommen wird, und dem Druckbereich bewegt werden. Dies erfolgt so, dass die Antriebseinrichtung die mehreren Trägereinrichtungen beim Verfahren in Zuführrichtung auf den verschiedenen Ebenen aneinander vorbei führt.

In der Offenlegungsschrift DE 10 2009 050 909 A1 sind eine Vorrichtung zum Austausch von Dokumenten und ein Verfahren zum Austauschen von Dokumenten beschrieben. Die Vorrichtung weist einen ersten Aufnahmeplatz zur Aufnahme eines ersten Dokuments und einen zweiten Aufnahmeplatz zur Aufnahme eines zweiten Dokuments auf. Ferner verfügt die Vorrichtung über Mittel zum Einfahren des ersten Dokuments auf den ersten Aufnahmeplatz sowie Mittel zum Ausfahren des zweiten Dokuments von dem zweiten Aufnahmeplatz. Die Vorrichtung ist derart ausgebildet, dass das Einfahren des ersten Dokumentes auf den ersten Aufnahmeplatz synchron zum Ausfahren des zweiten Dokumentes von dem zweiten Aufnahmeplatz ermöglicht werden soll.

In der Offenlegungsschrift EP 1 435 587 A2 ist eine Einrichtung zum Bearbeiten kartenförmiger Informationsträger, wie Scheckkarten, Kreditkarten, Ausweiskarten od.dgl. Karten, beschrieben. Die Einrichtung weist eine erste und/oder zweite Übergabevorrichtung mit jeweils einem umlaufend angetriebenen Rad auf, wodurch eine Übergabe einzelner Karten von einer Bahn zu einem bewegten Träger und die Übergabe vom bewegten Träger zurück auf die Bahn in kontinuierlicher und schneller Abfolge ermöglicht werden soll.

Der vorliegenden Erfindung liegt die Aufgabe zugrunde, eine Vorrichtung und ein Verfahren bereitzustellen, mit der bzw. dem der Vorgang zur Personalisierung von Dokumenten weiter verbessert, insbesondere der dabei erreichbare Dokumentendurchsatz erhöht, werden kann.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der Erfindung betrifft eine Vorrichtung zum Personalisieren von Dokumenten. Die Vorrichtung weist eine Personalisierungseinrichtung zum Versehen eines zu personalisierenden Dokuments, welches sich in einem Wirkbereich der Personalisierungseinrichtung befindet, mit ihm zugeordneten Personalisierungsinformationen auf.

Außerdem weist die Vorrichtung eine Verfahreinrichtung mit zumindest zwei verfahrbaren Dokumententrägereinrichtungen auf, von denen jede konfiguriert ist: (i) ein zu personalisierendes Dokument an einer für alle Dokumententrägereinrichtungen gleichen Transferposition der Vorrichtung aufzunehmen; (ii) das aufgenommene Dokument zu seiner Personalisierung in den Wirkbereich der Personalisierungseinrichtung zu bewegen; und (iii) das aufgenommene Dokument nach dessen Personalisierung zurück zu der Transferposition zu bewegen und dort auszugeben. Die Verfahreinrichtung ist dabei konfiguriert, bei ihrem Betrieb die Dokumententrägereinrichtungen jeweils entlang einer jeweils zugeordneten geschlossenen schleifenförmigen Bahnkurve zwischen der Transferposition, dem Wirkbereich und wiederum der Transferposition zu verfahren. Dabei erfolgt die Verfahrbewegung jeder der einzelnen Dokumententrägereinrichtungen entlang von ihrer Bahnkurve so zeitlich versetzt zur gleichsinnigen jeweiligen Verfahrbewegung jeder anderen der Dokumententrägereinrichtungen, dass die Dokumententrägereinrichtungen bei ihren jeweiligen Verfahrbewegungen entlang der Bahnkurve nicht miteinander kollidieren.

Erfindungsgemäß weist die Vorrichtung des Weiteren auf: (i) eine Steuerungseinrichtung zum Steuern der Vorrichtung, und (ii) eine Sensoreinrichtung, die konfiguriert ist, an einem oder mehreren bestimmten Punkten entlang der jeweiligen Bahnkurven einen oder mehrere aktuelle Bewegungsparameter der Dokumententrägereinrichtungen zu detektieren und an die Steuerungseinrichtung zu übermitteln. Dabei ist die Steuerungseinrichtung konfiguriert, die Vorrichtung in Abhängigkeit von diesen jeweiligen Bewegungsparametern zu steuern. Die Bewegungsparameter können sich insbesondere auf eine, insbesondere zeitabhängige, Position, Geschwindigkeit, Beschleunigung oder Bewegungsrichtung der Dokumententrägereinheit oder eine Kombination aus zwei oder mehreren der vorgenannten Bewegungsparameter beziehen und insbesondere zu einer Überwachung des fehlerfreien Betriebs der Vorrichtung dienen. Des Weiteren kann diese Sensoreinrichtung, oder optional eine weitere Sensoreinrichtung, dazu vorgesehen sein, das Beladen der Dokumententrägereinrichtungen mit Dokumenten und/oder das spätere Entladen der Dokumente sensorisch zu überwachen, insbesondere im Hinblick auf die Erkennung etwaiger Fehlfunktionen.

Erfindungsgemäß ist die Verfahreinrichtung eingerichtet, die Bahnkurve zumindest einer der Dokumententrägereinrichtungen in Abhängigkeit von einer entsprechenden auf den Bewegungsparametern basierenden Ansteuerung durch die Steuerungseinrichtung zu variieren. Insbesondere kann dabei die Länge einzelner Abschnitte der Bahnkurve variiert werden. In einer beispielhaften Variante dazu, kann ein solcher Abschnitt in Abhängigkeit von der auf den Bewegungsparametern basierenden Ansteuerung insbesondere als geradlinige Bahnkurve oder aber als bogenförmige Bahnkurve größerer Länge ausgestaltet sein. Auf diese Weise lassen sich, insbesondere bei gleichbleibender Bahngeschwindigkeit, insbesondere temporär auftretende Schwankungen im Bewegungsablauf bzw. unerwünschte Phasenverschiebungen zwischen den Bewegungen der einzelnen Dokumententrägereinrichtungen während des laufenden Betriebs korrigieren, um so zu einem fehlerfreien Betrieb zurückzukehren.

Unter einer "Personalisierungseinrichtung" im Sinne der Erfindung ist ein Subsystem der Vorrichtung zum Personalisieren von Dokumenten zu verstehen, die dazu eingerichtet ist, ein Dokument während seiner Verarbeitung durch die Personalisierungseinrichtung mit dem Dokument zugeordneten Personalisierungsinformationen zu versehen. Dazu kann die Personalisierungseinrichtung insbesondere eine Druckeinrichtung, beispielsweise einen Tintenstrahldrucker oder einen Drop-on-Demand Drucker (DoD-Drucker), einen Markierungslaser oder einen Programmierkopf zum Schreiben von Personalisierungsdaten auf einen in dem Dokument vorhandenen Datenspeicher aufweisen. Im Falle des Bedruckens, können die Personalisierungsinformationen insbesondere monochrom oder in Farbe auf das Dokument aufgebracht werden. Darüber hinaus ist es möglich, dass die Personalisierungseinrichtung eine Kombination aus einer Druckeinrichtung zum Aufbringen von Tinte sowie eine zusätzliche Nachbehandlungseinrichtung für die Tinte, insbesondere eine Quelle für ultraviolettes Licht zum Aushärten UV-empfindlicher Tinten aufweist. Zudem kann die Personalisierungseinrichtung zusätzlich oder alternativ dazu eingerichtet sein, eine transparente Tinte oder Beschichtung aufzubringen (z.B. "Liquid Coating"). Auch können optional in der Vorrichtung zum Personalisieren von Dokumenten mehrere Personalisierungseinrichtungen vorgesehen sein, insbesondere so, dass sie die Dokumente seriell oder parallel verarbeiten. Verschiedene Personalisierungseinrichtungen können in einigen Varianten dazu auch unterschiedliche Verfahrensschritte ausführen, wie etwa Bedrucken einerseits und Schreiben von elektronischen Daten in einen Speicher des Dokuments andererseits.

Unter dem "Wirkbereich" der Personalisierungseinrichtung ist im Sinne der Erfindung dementsprechend ein räumlicher Bereich an, in oder im Umfeld der Personalisierungseinrichtung zu verstehen, in dem das Versehen des Dokuments mit den Personalisierungsinformationen auftritt. Insbesondere kann dies derjenige räumliche Bereich sein, in dem (i) im Falle einer Bedruckung die Drucktinte auf das Dokument aufgebracht wird, (ii) im Falle einer Laserbehandlung die oberflächenverändernde Wirkung des Lasers auf der Dokumentenoberfläche auftritt, oder (iii) im Falle einer Programmierung eine Datenübertragung auf einen in den Dokument vorhandenen Datenspeicher auftritt, beispielsweise mittels elektrischer Kontaktierung, Induktion oder kurzreichweitiger elektromagnetischer Strahlung.

Unter einer "Dokumententrägereinrichtung" im Sinne der Erfindung ist eine Aufnahmevorrichtung für ein zu personalisierendes Dokument zu verstehen, das dazu vorgesehen ist, das Dokument während des Personalisierungsvorgangs in den Wirkbereich der Personalisierungseinrichtung zu überführen und dabei zu tragen. Dazu kann die Dokumententrägereinrichtung insbesondere konfiguriert sein, das Dokument (i) tablettartig zu tragen, (ii) zumindest teilweise in einem Hohlraum (Kavität) der Dokumententrägereinrichtung aufzunehmen, oder (iii) mittels einer Fixiereinrichtung an oder in der Dokumententrägereinrichtung zu fixieren, jeweils um es beim Verfahren der Dokumententrägereinrichtung mit dieser mit zu bewegen.

Unter einer "geschlossenen schleifenförmigen Bahnkurve" im Sinne der Erfindung ist eine endlich lange Bewegungskurve eines Objekts, hier speziell einer Dokumententrägereinrichtung, zu verstehen, bei der das Objekt ausgehend von einem auf der Bewegungskurve liegenden Knotenpunkt nach dem Durchlaufen der Bewegungskurve, welche eine nichtleeren Flächenbereich umschließt, zu dem Knoten zurückkehrt und somit den Knotenpunkt mit sich selbst mittels einer durch die Bewegungskurve gegebenen geschlossenen Schleife verbindet. Eine reine Hin- und Her-Bewegung von bzw. zu einem Knotenpunkt, beispielsweise entlang eines linearen Wegs, wie etwa einer Schiene oder sonstigen linearen Führung, stellt somit keine geschlossene schleifenförmige Bahnkurve im Sinne der Erfindung dar.

Die Verfahrbewegungen der Dokumententrägereinrichtungen sind "gleichsinnig" im Sinne der Erfindung, wenn dabei die jeweiligen zugehörigen Dokumententrägereinrichtung, bei seitlicher Betrachtung vom gleichen Blickpunkt aus, ihre jeweiligen schleifenförmigen Bahnkurven im selben Durchlaufsinn, also im Uhrzeigersinn oder gegen den Uhrzeigersinn, durchlaufen.

Bei einer solchen erfindungsgemäßen Vorrichtung können somit mehrere Dokumente, die von verschiedenen Dokumententrägern getragen werden und daher beim Betrieb der Vorrichtung deren jeweiligen Bahnkurven folgen, gleichzeitig prozessiert werden, wobei sie zur gleichen Zeit jedoch jeweils einen unterschiedlichen Bereich der Vorrichtung durchlaufen, was eine Parallelisierung von mehreren Prozessschritten ermöglicht. So lässt sich insbesondere der Durchsatz der Vorrichtung bei der Personalisierung der Dokumente weiter erhöhen. Insbesondere kommt der durch die Vorrichtung festgelegte Bewegungsablauf der Dokumententräger, jedenfalls bei fortlaufender Beschickung mit zu personalisierenden Dokumenten, auch ohne Leerfahrten von Dokumententrägern aus, was ebenso der Steigerung des erreichbaren Durchsatzes zuträglich ist.

Auch tragen die schleifenförmige Ausgestaltung der Bahnkurven und die gleichsinnigen Verfahrbewegungen dazu bei, dass zeitraubende und bei den angestrebten hohen Durchsatzraten mit hohen Beschleunigungen verbundene Bewegungsrichtungsumkehrungen bei der Bewegung der Dokumente vermieden werden können, was ebenfalls zur Durchsatzerhöhung sowie zusätzlich zur Vermeidung von beschleunigungsabhängigen Dejustierungen der Dokumente und somit zur Qualitätssicherung beitragen kann.

Des Weiteren erlaubt es die Vorrichtung, die Personalisierungseinrichtung ortsfest vorzusehen und stattdessen nur die zu personalisierenden Dokumente mittels der beweglichen Dokumententrägereinrichtungen zu bewegen, um sie der Personalisierungseinrichtung zuzuführen bzw. nach der Personalisierung von dieser weg zu führen. Somit kann der Gefahr von Dejustierungen oder gar Beschädigungen der oftmals sehr empfindlichen Personalisierungseinrichtungen, wie etwa Druckköpfen, wie sie bei alternativen Vorrichtungen, bei denen die Personalisierungseinrichtung oder Teile davon bewegt werden müssen, effektiv begegnet werden.

Nachfolgend werden bevorzugte Ausführungsformen der Vorrichtung beschrieben, die jeweils, soweit dies nicht ausdrücklich ausgeschlossen wird oder technisch unmöglich ist, beliebig miteinander kombiniert werden können und die gleichermaßen für das im Anschluss daran beschriebene Verfahren nach dem zweiten Aspekt der Erfindung entsprechend anwendbar sind.

Gemäß einigen Ausführungsformen weist die Vorrichtung des Weiteren eine Transporteinrichtung auf, die eingerichtet ist, entlang einer Transportstrecke ein zu personalisierendes Dokument der Transferposition zur Aufnahme desselben durch eine der Dokumententrägereinrichtungen zuzuführen und ein bereits von der Personalisierungseinrichtung personalisiertes und an der Transferposition von einer der Dokumententrägereinrichtungen ausgegebenes Dokument von der Transferposition wegzuführen. Auf diese Weise kommt die Vorrichtung mit einer einzigen Transferposition aus, an der sowohl das Aufnehmen der Dokumente durch die jeweils zugeordnete Dokumententrägereinrichtung als auch das nachfolgende Ausgeben des entsprechenden Dokuments nach dessen Personalisierung erfolgen. Dies liefert nicht nur den Vorteil, dass eine besonders kompakte Bauweise ermöglicht wird, sondern es ermöglicht zudem, dass Leerfahrten der Dokumententrägereinrichtungen vermieden werden, da eine gerade entladene Dokumententrägereinrichtung unmittelbar anschließend an Ort und Stelle ohne dazwischenliegende Verfahrbewegung mit einem weiteren Dokument beladen werden kann. Auch dies dient der Steigerung des erreichbaren Durchsatzes. Zudem entfällt, insbesondere gegenüber der Lehre der DE 10 2006 031 024 A1, der Bedarf für separate, zusätzlich zu den Dokumententrägereinrichtungen vorgesehene, Bestückungs- oder Entnahmeeinheiten, da die Dokumententrägereinrichtungen unmittelbar von der Transporteinrichtung aus mit den Dokumenten beladen werden bzw. diese nach ihrer Prozessierung auf diese entladen.

Die vorausgehend beschriebene Bauweise der Vorrichtung kann gemäß einigen Ausführungsformen insbesondere so implementiert sein, dass die Verfahreinrichtung beidseitig der Transportstrecke jeweils eine Verfahreinheit zum Verfahren von zumindest einer der Dokumententrägereinrichtungen entlang ihrer jeweiligen Bahnkurve aufweist. Dies erlaubt unter anderem eine entkoppelte Bewegung der verschiedenen Dokumententrägereinrichtungen, insbesondere im Falle von nur zwei Dokumententrägereinrichtungen, was die Flexibilität der Vorrichtung erhöht. Insbesondere erlaubt es eine solche Lösung auch, im Falle von bei der Personalisierung auftretenden unregelmäßigen Verzögerungen, darauf flexibel durch entsprechende individuelle Ansteuerung der einzelnen Verfahreinheiten zu reagieren, um den kontinuierlichen Betrieb der Vorrichtung und damit den gewünschten hohen Durchsatz sicherstellen zu können und zudem dabei eine Kollision der Dokumententrägereinrichtungen während ihrer jeweiligen Verfahrbewegungen zu vermeiden.

Gemäß einigen Ausführungsformen ist die Vorrichtung des Weiteren konfiguriert, die jeweiligen Verfahrbewegungen der Dokumententrägereinrichtungen entlang ihrer jeweiligen Bahnkurve so durchzuführen, dass zumindest an der Transferposition ein Zwischenstopp erfolgt. Dies hat den Vorteil, dass das Beladen und das Entladen der Dokumententrägereinrichtungen an der Transferposition bei ruhender Dokumententrägereinrichtung erfolgen kann, was die Komplexität der Umsetzung der Be- und Entladevorgänge vereinfacht und zu einer erhöhten Zuverlässigkeit dieser Vorgänge und somit des Gesamtbetriebs der Vorrichtung beitragen kann.

Gemäß einigen Ausführungsformen ist die zeitliche Versetzung der Bewegungen der Dokumententrägereinrichtungen entlang ihrer jeweiligen Bahnkurve so festgelegt, dass sich zu dem Zeitpunkt, an dem sich eine der Dokumententrägereinrichtungen an der Transferposition befindet, gleichzeitig eine andere der Dokumententrägereinrichtungen im Wirkbereich der Personalisierungseinrichtung befindet. Auf diese Weise ist eine simultane Prozessführung in dem Sinne ermöglicht, dass gleichzeitig eine Personalisierung eines durch eine Dokumententrägereinrichtungen getragenen Dokuments sowie eine Entladung und anschließende Neubeladung einer anderen der Dokumententrägereinrichtungen mit einem weiteren Dokument erfolgen können, was ebenfalls zur Steigerung des erreichbaren Durchsatzes der Vorrichtung beiträgt.

Insbesondere kann gemäß einer Weiterbildung dazu die Vorrichtung so konfiguriert sein, dass sich zu einem Zeitpunkt oder während einer Zeitspanne, an dem bzw. bei der sich eine der Dokumententrägereinrichtungen an der Transferposition befindet und sich eine andere der Dokumententrägereinrichtungen im Wirkbereich der Personalisierungseinrichtung befindet, diese andere Dokumententrägereinrichtung im Wirkbereich ebenfalls einen Zwischenstopp einlegt. Dies kann insbesondere dann hilfreich sein, wenn die Personalisierungseinrichtung so ausgestaltet ist, dass eine Personalisierung im Ruhezustand des zu personalisierten Dokuments gegenüber einer Personalisierung während der Bewegung des Dokuments vorteilhaft ist, etwa um etwaige Qualitätsnachteile zu vermeiden.

Gemäß einigen Ausführungsformen ist die Vorrichtung des Weiteren konfiguriert, wenn sich eine der Dokumententrägereinrichtungen an der Transferposition befindet, ein gegenwärtig von dieser Dokumententrägereinrichtung getragenes und bereits vorausgehend durch die Personalisierungseinrichtung personalisiertes Dokument auszugeben und an dessen Stelle ein weiteres, noch durch die Personalisierungseinrichtung zu personalisierendes anderes Dokument durch diese Dokumententrägereinrichtung aufzunehmen, bevor diese ihre Bewegung für einen erneuten Durchlauf ihrer Bahnkurve fortsetzt. So wird die Dokumententrägereinrichtung an Ort und Stelle an der Transferposition sowohl entladen als auch neu beladen, ohne dass dazwischen eine Leerfahrt der Dokumententrägereinrichtung stattfindet bzw. erforderlich ist. Somit ist eine weitere Steigerung des Durchsatzes der Vorrichtung erreichbar, da auf diese Weise der Anteil der jeweiligen Bahnkurve der Dokumententrägereinrichtungen, entlang dem sie nicht mit einem Dokument zu dessen Prozessierung beladen sind, minimiert und insbesondere auf null reduziert werden kann.

Gemäß einigen Ausführungsformen ist die Bahnkurve zumindest einer der Dokumententrägereinrichtungen so festgelegt, dass beim Betrieb der Vorrichtung diese Bahnkurve einen je Bahnkurvendurchlauf zweifach durchlaufenen Kurvenabschnitt zwischen der Transferposition und einer ersten Zwischenposition aufweist, wobei dieser Kurvenabschnitt einerseits im Rahmen einer Weg-Bewegung dieser Dokumententrägereinrichtung von der Transferposition zur ersten Zwischenposition und andererseits zeitlich versetzt dazu und in entgegengesetzter Richtung im Rahmen einer Hin-Bewegung der Dokumententrägereinrichtung von der ersten Zwischenposition zur Transferposition während des gleichsinnigen Durchlaufens der schleifenförmigen Bahnkurve von dieser Dokumententrägereinrichtung durchlaufen wird. Mithilfe dieser Ausführungsformen lässt sich insbesondere die Bewegung der Dokumententrägereinrichtungen entlang des zweifach durchlaufenden Kurvenabschnitts bezüglich der Richtung und der Geschwindigkeit der Bewegung so gestalten, insbesondere auch variabel konfigurieren, dass unerwünschte Wechselwirkungen zwischen der Dokumententrägereinrichtung und der Transporteinrichtung im Bereich der Transferposition minimiert oder ganz vermieden werden können. Insbesondere lässt sich so auf einfache Weise eine unerwünschte Kollision der bewegten Dokumententrägereinrichtung mit der Transporteinrichtung vermeiden. Dazu kann beispielsweise die Bewegungsgeschwindigkeit Dokumententrägereinrichtung in dem Kurvenabschnitt gegenüber der Bewegungsgeschwindigkeit im sonstigen Bereich der Bahnkurve, insbesondere gegenüber der Bewegungsgeschwindigkeit auf dem Rückweg von der Personalisierungseinrichtung, reduziert werden und/oder eine senkrechte Annäherung der Dokumententrägereinrichtungen an die Transporteinrichtung vorgesehen werden, um tangentiale Bewegungskomponenten, welche zu Beschädigungen führen könnten, auszuschließen.

Bei einigen Weiterbildungen dieser Ausführungsformen weist die Bahnkurve der zumindest einen Dokumententrägereinrichtung des Weiteren eine zwischen dem Wirkbereich und der ersten Zwischenposition gelegene zweite Zwischenposition auf und die Vorrichtung ist des Weiteren konfiguriert, eine im Rahmen der Wegbewegung von der Transferposition entlang des Kurvenabschnitts erfolgende Bewegung einer ersten der Dokumententrägereinrichtungen so zeitlich versetzt vor einer Bewegung einer unmittelbar nachfolgenden zweiten der Dokumententrägereinrichtungen im Rahmen der Hin-Bewegung von der zweiten Zwischenposition aus über die erste Zwischenposition hin zur Transferposition auszuführen, dass die zweite Dokumententrägereinrichtung dabei die erste Zwischenposition erst erreichen kann, wenn die erste Dokumententrägereinrichtung diese bereits wieder verlassen hat. Insbesondere kann dazu die zweite Zwischenposition als Halteposition vorgesehen sein, an dem die Bewegung der zweiten Dokumententrägereinrichtung gestoppt oder verlangsamt wird, um sicherzustellen, dass die zweite Dokumententrägereinrichtung die erste Zwischenpositionen erst erreichen kann wenn die vorausgehende erste Dokumententrägereinrichtung diese bereits im Rahmen ihrer Weg-Bewegung von der Transferposition verlassen hat. Auf diese Weise lassen sich gemäß diesen Ausführungsformen trotz des gemeinsamen Streckenabschnitts der Bewegungen der Dokumententrägereinrichtungen im Bereich des zwischen der ersten Zwischenposition und der Transferposition liegenden Kurvenabschnitts Kollisionen zwischen den Dokumententrägereinrichtungen vermeiden, insbesondere selbst im Falle von unvorhergesehenen Verzögerungen im Bewegungsablauf einer oder mehrerer der Dokumententrägereinrichtungen.

Gemäß einigen Ausführungsformen ist die Vorrichtung konfiguriert, die Verfahrbewegungen der Dokumententrägereinrichtungen getaktet gemäß einem gemeinsamen Systemtakt auszuführen, wobei jede Bahnkurve in zumindest drei Bahnabschnitte unterteilt wird und jeweils einer oder zwei aufeinanderfolgende Bahnabschnitte je einzelnen Takt des Systemtakts durchlaufen werden. Auch dies trägt dazu bei, Kollisionen der einzelnen Dokumententrägereinrichtungen zu vermeiden, da die zeitlichen Versetzungen der Bewegungen der Dokumententrägereinrichtungen entlang ihrer Bahnkurven mittels einer geeigneten Zuordnung der einzelnen Bahnabschnitte zum Systemtakt taktbezogen auf solche Weise festgelegt sein können, dass sich die verschiedenen Dokumententrägereinrichtungen zu einem gegebenen Zeitpunkt stets in verschiedenen, nicht miteinander kollidierenden Bahnabschnitten befinden.

Gemäß einigen Ausführungsformen ist die Vorrichtung des Weiteren konfiguriert, die Verfahrbewegungen der Dokumententrägereinrichtungen entlang ihrer jeweiligen Bahnkurve periodisch auszuführen, so dass die zeitlich versetzten Verfahrbewegungen der verschiedenen Dokumententrägereinrichtungen zueinander phasenversetzt verlaufen. Auf diese Weise lässt sich eine besonders einfache und robuste Arbeitsweise der Vorrichtung realisieren. Insbesondere sind diese Ausführungsformen auch mit den vorgenannten taktbasierten Ausführungsformen kombinierbar, sodass die periodischen Verfahrbewegungen der einzelnen Dokumententrägereinrichtungen jeweils in verschiedene jeweils während eines Taktes stattfindende Teilbewegungen unterteilt sein können.

Gemäß einigen Ausführungsformen ist die Vorrichtung des Weiteren so konfiguriert, dass die Bahnkurven von zumindest zwei, bevorzugt sämtlichen, der Dokumententrägereinrichtungen im Wirkbereich zusammenfallen, so dass die Personalisierung von durch diese Dokumententrägereinrichtungen getragenen Dokumenten am gleichen Ort bzw. im gleichen Ortsbereich innerhalb des Wirkbereichs der Personalisierungseinrichtung stattfindet. Dies schließt somit den Fall ein, dass die Bahnkurven nicht überall aber jedenfalls im Wirkbereich zusammenfallen. Ein Vorteil dieser Ausführungsformen liegt darin, dass die Personalisierungseinrichtung besonders einfach und kompakt gestaltet werden kann, da nicht auf verschiedene Bahnkurven im Wirkbereich Rücksicht genommen werden muss.

Gemäß einigen dieser Ausführungsformen ist die Vorrichtung des Weiteren so konfiguriert, dass die Bahnkurven von zumindest zwei, bevorzugt sämtlichen, der Dokumententrägereinrichtungen, zumindest im Wesentlichen, insgesamt zusammenfallen. Dies dient einer noch weiteren Vereinfachung der Vorrichtung, da nun weniger Bahnkurve implementiert werden müssen bzw. idealerweise nur eine einzige Bahnkurve implementiert werden muss, die sämtliche Dokumententrägereinrichtungen gleichsinnig und dabei zeitversetzt durchlaufen. Insbesondere folgt daraus auch, dass dann die Personalisierung der Dokumente im Wirkbereich der Personalisierungseinrichtung stets an derselben Ort beziehungsweise demselben Ortsbereich innerhalb des Wirkbereichs stattfindet. Insgesamt lässt sich so eine besonders einfache und kompakte Bauweise der Vorrichtung erreichen und ihre Komplexität weiter reduzieren.

Gemäß einigen Ausführungsformen ist die Bahnkurve zumindest einer der Dokumententrägereinrichtungen so festgelegt, dass beim Betrieb der Vorrichtung diese Bahnkurve einen je Bahnkurvendurchlauf mehrfach durchlaufenen Kurvenabschnitt aufweist, der durch den Wirkbereich verläuft, wobei bei zumindest zwei dieser Durchläufe durch den Kurvenabschnitt während eines selben Bahnkurvendurchlaufs jeweils eine Personalisierung eines durch die Dokumententrägereinrichtung aufgenommenen Dokuments durch die Personalisierungseinrichtung erfolgt, während sich dabei die Dokumententrägereinrichtung im Wirkbereich befindet. So können mehrere Personalisierungsvorgänge je Bahnkurvendurchlauf erfolgen, was insbesondere komplexere Personalisierungen mittels verschiedener Personalisierungsverfahren oder zur Ausbildung von einander überlagernden Personalisierungen je Dokument ermöglicht.

Gemäß einigen Ausführungsformen weist die Vorrichtung des Weiteren eine entlang der jeweiligen Bahnkurven der Dokumententrägereinrichtungen dem Wirkbereich der Personalisierungseinrichtung jeweils vorgelagerte Inspektionseinrichtung zum Detektieren der Lage eines von einer Dokumententrägereinrichtung aufgenommenen Dokuments bezüglich dieser Dokumententrägereinrichtung und zur Bestimmung und Übermittlung zumindest eines diese Lage kennzeichnenden Lageparameters. Dabei ist die Personalisierungseinrichtung konfiguriert, auf Basis von diesem zumindest einen Lageparameter eine Selbstkalibrierung zur Kompensation von etwaigen auf Basis des zumindest einen Lageparameters bestimmten Ausrichtungsabweichungen zwischen dem Dokument und der Personalisierungseinrichtung vorzunehmen, um nachfolgend auf Basis dieser Selbstkalibrierung das Dokument unabhängig von seiner relativen Lage bezüglich der es tragenden Dokumententrägereinrichtung mit einer Personalisierung zu versehen. Diese Maßnahmen dienen einer Qualitätsverbesserung im Hinblick auf eine korrekt ausgerichtete Aufbringung oder Einbringung einer Personalisierung auf bzw. in das Dokument. Insbesondere ist es daher möglich, auf spezielle Maßnahmen zur Ausrichtung des Dokuments gegenüber der Personalisierungseinrichtung bzw. der Dokumententrägereinrichtung zu verzichten oder diese weniger genau auszugestalten, da eine gegebenenfalls noch erforderliche Ausrichtungskorrektur mittels der genannten Selbstkalibrierung erfolgen kann.

Speziell kann gemäß einigen darauf aufbauenden Ausführungsformen die Personalisierungseinrichtung des Weiteren konfiguriert sein, (i) das Dokument durch Bedrucken zu personalisieren; und (ii) im Rahmen der Selbstkalibrierung eine Anpassung eines Soll-Drucklayouts für eine durch Bedrucken auf das Dokument aufzubringende Personalisierung mittels einer von dem zumindest einen Lageparameter abhängigen Transformation in ein tatsächlich zu druckendes, lagekompensiertes Drucklayout durchzuführen.

Auch kann gemäß weiterer Ausführungsformen die Personalisierungseinrichtung des Weiteren konfiguriert sein (i) das Dokument durch Laserbehandlung zu personalisieren; und (ii) im Rahmen der Selbstkalibrierung eine Anpassung eines Soll-Laserbehandlungslayouts für eine durch die Laserbehandlung auf das Dokument aufzubringende Personalisierung mittels einer von dem zumindest einen Lageparameter abhängigen Transformation in ein tatsächlich zu erzeugendes, lagekompensiertes Laserbehandlungslayout durchzuführen.

Gemäß einigen Ausführungsformen weist zumindest eine der Dokumententrägereinrichtungen eine Fixiereinrichtung zum Fixieren eines durch diese Dokumententrägereinrichtung getragenen Dokuments während des Durchlaufens ihrer Bahnkurve auf. So kann erreicht werden, dass das Dokument während seiner gemeinsamen Bewegung mit der es tragenden Dokumententrägereinrichtung auch beim Auftreten von Richtungsänderungen oder anderen Beschleunigungen seine Lage relativ zu der Dokumententrägereinrichtung beibehält. Folglich ist es damit zum einen mit der Dokumententrägereinrichtung fest verbunden, sodass es dessen Bahnkurve folgen kann. Zum anderen ist damit jedoch auch die Lage, insbesondere die Orientierung, des Dokuments relativ zur Dokumententrägereinrichtung fixierbar, was wiederum vorteilhaft eine feste Ausrichtung relativ zur Personalisierungseinrichtung und somit eine Qualitätssicherung bezüglich der Personalisierung des Dokuments ermöglicht.

Gemäß einigen Weiterbildungen dazu weist die Dokumententrägereinrichtung eine Kavität zur zumindest teilweisen Aufnahme des Dokuments auf. Zudem ist dabei die Fixiereinrichtung als Klemmvorrichtung ausgebildet, die so konfiguriert ist, dass sie im Betrieb zum Fixieren des Dokuments in der Kavität das Dokument zumindest von einer Seite her temporär mit einem Druck beaufschlagt, um das Dokument gegen eine gegenüberliegende Innenwand der Kavität zu pressen und es dadurch zu fixieren. Auf diese Weise lässt sich das Dokument auch angesichts der mit hohen Durchsatzraten verbundenen hohen Beschleunigungen sicher in der Dokumententrägereinrichtung mitführen und fixieren.

Dazu kann gemäß einigen Varianten die Klemmvorrichtung insbesondere ausgebildet sein, den Druck zur temporären Beaufschlagung des Dokuments zum Zwecke seiner Fixierung auf pneumatischem Wege bereitzustellen. Bei einigen dieser Varianten weist die Klemmvorrichtung dazu eine pneumatische Druckkammer auf, die konfiguriert ist, (i) an der Transferposition unter Druck befüllt zu werden und (ii) während die zugehörige Dokumententrägereinrichtung die Bahnkurve außerhalb der Transferposition durchläuft, ohne externe Zuführung von pneumatischem Druck das Dokument zum Zwecke seiner Fixierung mittels der Klemmvorrichtung mit pneumatischem Druck zu beaufschlagen. Eine solche Implementierung hat den Vorteil, dass die Fixierung des Dokuments in der entlang ihrer Bahnkurve beweglichen Dokumententrägereinrichtung autark aufrechterhalten werden kann, ohne dass dazu eine Druckbeaufschlagung von außerhalb der Dokumententrägereinrichtung, etwa mittels Druckzuführung durch pneumatische Schläuche, erforderlich ist.

Gemäß einigen anderen Varianten kann die Klemmvorrichtung (10; 10a, 10b) mit einem als Teil der Dokumententrägereinrichtung vorgesehenen Fixiereinrichtung (20) gekoppelt sein, die konfiguriert ist, die Stellung der Klemmvorrichtung (10; 10a, 10b) lösbar zu arretieren, wenn diese zum Fixieren des Dokuments (D) unter Druck auf dieses gepresst wird. Dies erlaubt besonders kurze Verweildauern an der Transferposition und somit besonders hohen Durchsatz.

Gemäß einigen Ausführungsformen weist zumindest eine der Dokumententrägereinrichtungen eine Ausrichtungseinrichtung zum Ausrichten eines durch diese Dokumententrägereinrichtung aufgenommenen Dokuments gemäß einer vorbestimmten Soll-Ausrichtung auf. Die Ausrichtungseinrichtung kann dazu insbesondere einen oder mehrere, insbesondere bewegliche, Zentrierstifte aufweisen, die eingerichtet sind, das Dokument relativ zu der es tragenden Dokumententrägereinrichtung gemäß der Soll-Ausrichtung auszurichten, insbesondere im Sinne einer Zentrierung. Diese Ausführungsformen können insbesondere anstelle der vorgenannten Lösung mittels Selbstkalibrierung oder aber additiv dazu eingesetzt werden, etwa, um vor einer feineren Selbstkalibrierung eine Grobausrichtung des Dokuments zu bewerkstelligen. Eine solche Ausrichtung dient wiederum insbesondere der Qualitätssicherung bezüglich einer ausgerichteten Aufbringung bzw. Einbringung einer Personalisierung auf bzw. in das zu personalisierende Dokument.

Gemäß einigen Ausführungsformen weist zumindest eine der Dokumententrägereinrichtungen ein Gehäuse auf, in dem sich eine Kavität zur zumindest teilweisen Aufnahme des Dokuments befindet, wobei das Gehäuse zumindest eine Gehäuseaussparung aufweist, die so konfiguriert ist, dass durch sie hindurch eine Personalisierung des Dokuments mittels der Personalisierungseinrichtung ermöglicht ist, wenn sich das Dokument im Wirkbereich befindet. Auf diese Weise können zugleich eine besonders stabile Fixierung des Dokuments in der Dokumententrägervorrichtung erreicht werden als auch eine dadurch unbeeinträchtigte Personalisierung, insbesondere Bedruckung, des Dokuments durch diese Gehäuseaussparung hindurch erfolgen. Auch andere Prozessschritte sind auf gleiche Weise in Bezug auf das Dokument durch diese Gehäuseaussparung hindurch ausführbar, beispielsweise Laserbehandlungen oder Magnetisierungen.

Gemäß einigen dieser Ausführungsformen weist das Gehäuse dabei zumindest zwei zueinander benachbarte und durch einen Zwischensteg voneinander separierte Gehäuseaussparungen auf. Diese sind jeweils so konfiguriert, dass durch sie hindurch eine Personalisierung eines von der jeweiligen Gehäuseaussparung freigelegten Teils des Dokuments, insbesondere jeweils eine Seite eines buchartig gebundenen mehrseitigen Dokuments, mittels der Personalisierungseinrichtung ermöglicht ist, wenn sich das Dokument im Wirkbereich befindet. Der Zwischensteg dient insbesondere als das Dokument leitendes Führungselement beim Aufnehmen oder Ausgeben des Dokuments an der Transferposition sowie zum abschnittsweisen Niederhalten und somit zusätzliches Fixieren des Dokuments, während es sich in der Kavität des Gehäuses befindet, wie insbesondere während der Personalisierung des Dokuments im Wirkbereich durch die Personalisierungseinrichtung sowie während des Transports dorthin und zurück zur Transferposition.

Gemäß einigen Ausführungsformen, bei denen zumindest eine der Dokumententrägereinrichtungen ein Gehäuse aufweist, in dem sich eine Kavität zur zumindest teilweisen Aufnahme des Dokuments befindet, weist die Vorrichtung des Weiteren eine Niederhaltereinrichtung auf, die konfiguriert ist, temporär, wenn sich die Dokumententrägereinrichtung an der Transferposition befindet, durch deren zumindest eine Gehäuseaussparung hindurch eine Führungskraft auf das Dokument auszuüben, um dieses zumindest stellenweise niederzuhalten, während es gerade in die Kavität des Gehäuses aufgenommen oder daraus ausgegeben wird. So kann insbesondere einem verhaken des Dokuments an einer oder mehreren Kanten der zumindest einen Gehäuseaussparung entgegengewirkt werden, um eine störungsfreie Aufnahme und Ausgabe des Dokuments an der Transferposition zu fördern.

Ein zweiter Aspekt der Erfindung betrifft ein Verfahren zum Personalisieren von Dokumenten. Das Verfahren weist auf: (i) Aufnehmen eines zu personalisierenden Dokuments durch eine von mehreren Dokumententrägereinrichtungen einer Vorrichtung zum Personalisieren von Dokumenten, wobei das Aufnehmen an einer für alle Dokumententrägereinrichtungen gleichen Transferposition der Vorrichtung erfolgt; (ii) Verfahren der Dokumententrägereinrichtung mit dem durch sie aufgenommenen Dokument zu dessen Personalisierung in den Wirkbereich einer Personalisierungseinrichtung der Vorrichtung; (iii) Versehen des Dokuments, wenn es sich im Wirkbereich der Personalisierungseinrichtung befindet, mit ihm zugeordneten Personalisierungsinformationen; (iv) Verfahren der Dokumententrägereinrichtung mit dem durch sie aufgenommenen Dokument nach dessen Personalisierung zurück zu der Transferposition, um es dort von der Dokumententrägereinrichtung auszugeben, während bereits eine weitere der Dokumententrägereinrichtungen mit einem weiteren, durch sie aufgenommenen Dokument ihre Bahnkurve zur Personalisierung dieses weiteren Dokuments durchläuft. Dabei wird jede der Dokumententrägereinrichtungen jeweils entlang einer jeweils zugeordneten geschlossenen schleifenförmigen Bahnkurve zwischen der Transferposition, dem Wirkbereich und wiederum der Transferposition verfahren. Zudem erfolgt die Verfahrbewegung jeder der einzelnen Dokumententrägereinrichtungen entlang von ihrer Bahnkurve so zeitlich versetzt zur jeweiligen gleichsinnigen Verfahrbewegung jeder anderen Dokumententrägereinrichtung, dass die Dokumententrägereinrichtungen bei ihren jeweiligen Verfahrbewegungen entlang der Bahnkurve nicht miteinander kollidieren; (v) Steuern der Vorrichtung durch eine Steuerungseinrichtung, und Detektieren an einem oder mehreren bestimmten Punkten entlang der jeweiligen Bahnkurven einen oder mehrere aktuelle Bewegungsparameter der Dokumententrägereinrichtungen und Übermitteln der einen oder mehreren aktuellen Bewegungsparameter durch eine Sensoreinrichtung an die Steuerungseinrichtung; wobei das Steuern der Vorrichtung durch die Steuerungseinrichtung in Abhängigkeit von diesen jeweiligen Bewegungsparametern erfolgt; Variieren der Bahnkurve durch die Verfahreinrichtung zumindest einer der Dokumententrägereinrichtungen in Abhängigkeit von einer entsprechenden auf den Bewegungsparametern basierenden Ansteuerung durch die Steuerungseinrichtung.

Dieses Verfahren korrespondiert somit zu der im Rahmen des ersten Aspekts der Erfindung beschriebenen Vorrichtung, sodass die dort genannten Vorteile, Ausführungsformen bzw. Weiterbildungen gleichermaßen für das Verfahren gemäß dem zweiten Aspekt der Erfindung zur Anwendung kommen können.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:
**Fig. 1** in einer seitlichen Perspektivansicht eine Vorrichtung gemäß einer beispielhaften erfindungsgemäßen Ausführungsform, bei der zwei Dokumententrägereinrichtungen vorgesehen sind;
**Fig. 2** eine schematische Darstellung der Antriebseinrichtung nebst Steuervorrichtung, jeweils der Vorrichtung aus Fig. 1;
**Fig. 3A** eine schematische Darstellung einer Dokumententrägereinrichtung der Vorrichtung aus Fig. 1 sowie einer Fixierungseinrichtung der Vorrichtung gemäß einer ersten beispielhaften Ausführungsform;
**Fig. 3B** eine schematische Darstellung einer Dokumententrägereinrichtung der Vorrichtung aus Fig. 1 sowie einer Fixierungseinrichtung der Vorrichtung gemäß einer zweiten beispielhaften Ausführungsform;
**Fig. 4** schematisch verschiedene Varianten für den Verlauf der Bahnkurven der Dokumententrägereinrichtungen der Vorrichtung aus Fig. 1, gemäß einer ersten beispielhaften Ausführungsform der Erfindung;
**Fig. 5** schematisch verschiedene Varianten für den Verlauf der Bahnkurven der Dokumententrägereinrichtungen der Vorrichtung aus Fig. 1, gemäß einer zweiten beispielhaften Ausführungsform der Erfindung;
**Fig. 6** schematisch verschiedene Varianten für den Verlauf der Bahnkurven der Dokumententrägereinrichtungen der Vorrichtung aus Fig. 1, gemäß einer dritten beispielhaften Ausführungsform der Erfindung;
**Fig. 7** zeigt eine Detailansicht der Transferposition und ihrer unmittelbaren Umgebung bei einer bevorzugten Ausführungsform einer erfindungsgemäßen Vorrichtung mit einer Niederhaltereinrichtung zur Unterstützung des Beladens und Entladens der Dokumententrägervorrichtungen, wobei die Niederhaltereinrichtung in einem deaktivierten Zustand gezeigt ist; und
**Fig. 8** zeigt eine Detailansicht der Transferposition und ihrer unmittelbaren Umgebung bei der Ausführungsform aus Fig. 7, wobei die Niederhaltereinrichtung in einem aktivierten Zustand gezeigt ist.

In den Figuren werden durchgängig, außer für die Bahnabschnittbezeichnungen, dieselben Bezugszeichen für dieselben oder einander entsprechenden Elemente der Erfindung verwendet.

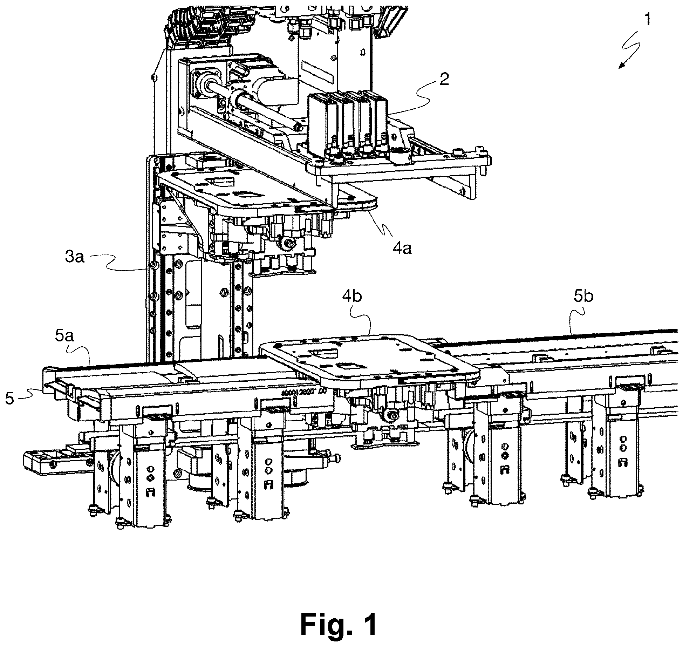

**Fig. 1** zeigt in einer seitlichen Perspektivansicht eine Vorrichtung 1 gemäß einer beispielhaften Ausführungsform der Erfindung, bei der zwei Dokumententrägereinrichtungen 4a und 4b vorgesehen sind, ohne dass diese Anzahl jedoch als Beschränkung zu verstehen ist. Andere Ausführungsformen können auch mehr als zwei Dokumententrägereinrichtungen, beispielsweise drei oder vier Dokumententrägereinrichtungen, aufweisen. Jeder der Dokumententrägereinrichtungen 4a und 4b der Vorrichtung 1 ist eine Verfahreinheit zugeordnet, mithilfe derer die jeweilige Dokumententrägereinrichtung 4a bzw. 4b zumindest in zwei räumlichen Dimensionen, nämlich in der Höhe sowie entlang einer durch eine Transporteinrichtung 5 der Vorrichtung 1 definierten horizontalen Richtung verfahrbar ist. In Fig. 1 ist aus Gründen der Übersichtlichkeit nur eine der Verfahreinheiten dargestellt, nämlich die Verfahreinheit 3a, welche der ersten Dokumententrägereinrichtung 4a zugeordnet ist. Die Verfahreinheiten bilden zusammen eine Verfahreinrichtung für die Dokumententrägereinrichtungen 4a und 4b.

Die Vorrichtung 1 weist zudem eine Personalisierungseinrichtung 2 zum Personalisieren von Dokumenten auf. Dazu ist die Vorrichtung 1 eingerichtet: (i) in jeder der Dokumententrägereinrichtungen 4a, 4b ein Dokument D von einem ersten Transportstreckenabschnitt 5a der Transporteinrichtung 5, der zum Zuführen von Dokumenten dient, aufzunehmen, (ii) das Dokument D mithilfe einer entsprechenden Verfahrbewegung der zugehörigen Dokumententrägereinrichtung 4a bzw. 4b bis in einen Wirkbereich 2a der Personalisierungseinrichtung 2 zu verfahren, welche in dem Wirkbereich 2a eine Personalisierung des Dokuments D, beispielsweise mittels Bedruckung, Gravur, Oberflächenveränderung oder Programmierung mit Daten, vornimmt, und (iii) das Dokument D nachfolgend zurück zur Transporteinrichtung 5 zu verfahren. Dort wird sodann das Dokument D an einen zweiten Transportstreckenabschnitt 5b der Transporteinrichtung 5 zum Abtransport ausgegeben. Das Beladen bzw. Entladen des Dokuments D in bzw. von der entsprechenden Dokumententrägereinrichtung 4a, 4b erfolgt an einer an der Transportstrecke 5 liegenden Position der Bahnkurve, die hier als Transferposition 6 bezeichnet wird.

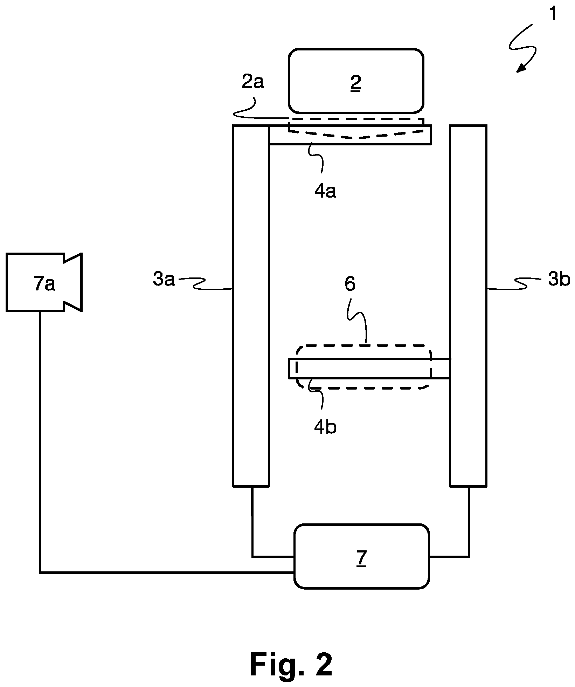

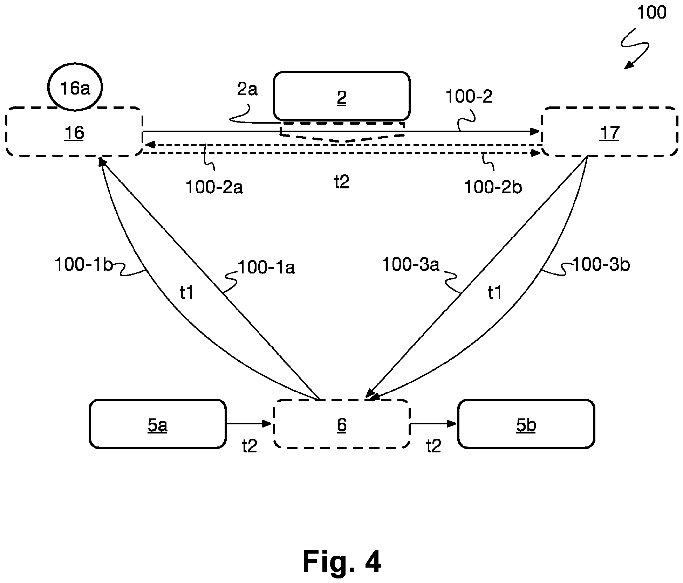

**Fig. 2** zeigt zur Verdeutlichung eine Seitenansicht der Vorrichtung 1 (in Teilen) entlang der durch den Verlauf der Transporteinrichtung 5 bestimmten Blickrichtung zu einem beispielhaften Zeitpunkt, an dem die erste Dokumententrägereinrichtung 4a bei ihrer durch die Verfahrbewegung definierten Bahnkurve ihre maximale Höhe erreicht hat, während gleichzeitig die zweite Dokumententrägereinrichtung 4b entsprechend ihre minimale Höhe erreicht hat. Der Verlauf der Bahnkurve gemäß verschiedener Ausführungsformen wird im Weiteren unter Bezugnahme auf die Figuren 4 bis 6 erläutert werden.

In der Darstellung in Fig. 2 sind beide Verfahreinheiten 3a sowie 3b dargestellt, die sich jeweils auf einer der anderen Dokumententrägereinrichtung gegenüberliegenden Seite der Transporteinrichtung 5 befinden, welche bei der Darstellung in Fig. 2 senkrecht zur Blattebene durch die Transferposition 6 verläuft. Zu ihrer Steuerung verfügt die Vorrichtung 1 des Weiteren über eine Steuerungseinrichtung 7, die insbesondere dazu dient, die Verfahreinheiten 3a und 3b anzusteuern und somit die Bewegung der Dokumententrägereinrichtungen 4a, 4b zu steuern. Im Sinne der Erfindung kann unter "Steuern" nicht nur ein Steuern, sondern auch ein Regeln (engl. feedback-control) im Sinne der Steuer- und Regelungstechnik verstanden werden. Dazu können insbesondere Bewegungsparameter als Eingangsgrößen Verwendung finden, die von einer Sensoreinrichtung 7a der Vorrichtung 1 geliefert werden, die zur sensorischen Erfassung von Bewegungsparametern der Bewegungen der Dokumententrägereinrichtungen entlang ihrer Bahnkurven eingerichtet ist.

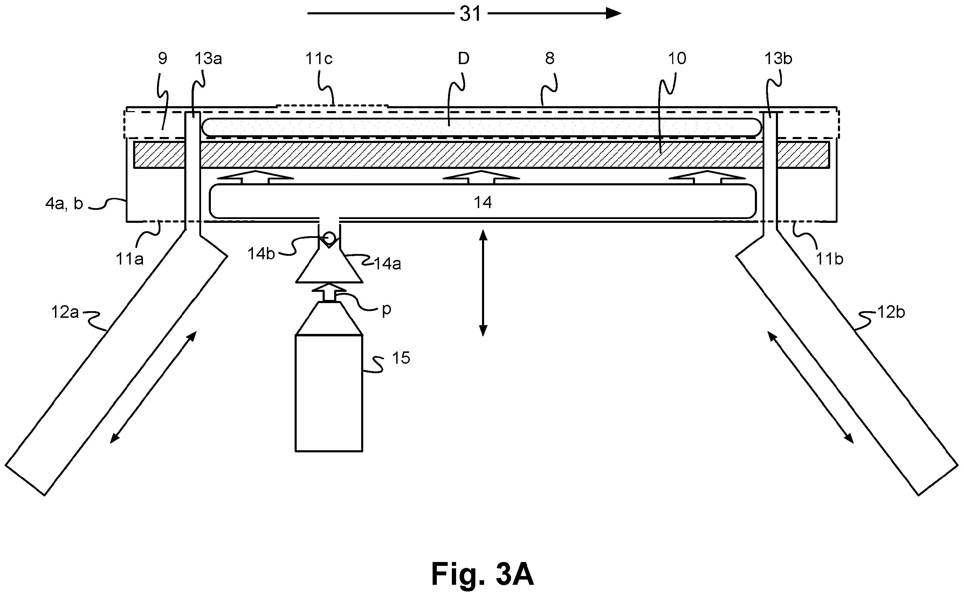

**Fig. 3A** stellt schematisch eine Dokumententrägereinrichtung 4a bzw. 4b der Vorrichtung aus Fig. 1 sowie eine beispielhafte Fixierungseinrichtung dazu gemäß einer ersten beispielhaften Ausführungsform dazu in einer Schnittansicht dar, bei der die Blickrichtung senkrecht zur Transportrichtung 31 verläuft, entlang der die Dokumente D durch die Transporteinrichtung 5 zu bzw. von der Transferposition 6 transportiert werden. Bei dieser Ausführungsform weist die Dokumententrägereinrichtung 4a bzw. 4b ein Gehäuse 8 auf, in dem sich unter anderen eine als Dokumentenschacht ausgebildete Kavität 9 befindet, die zur Aufnahme eines zu personalisierenden Dokuments D ausgelegt ist.

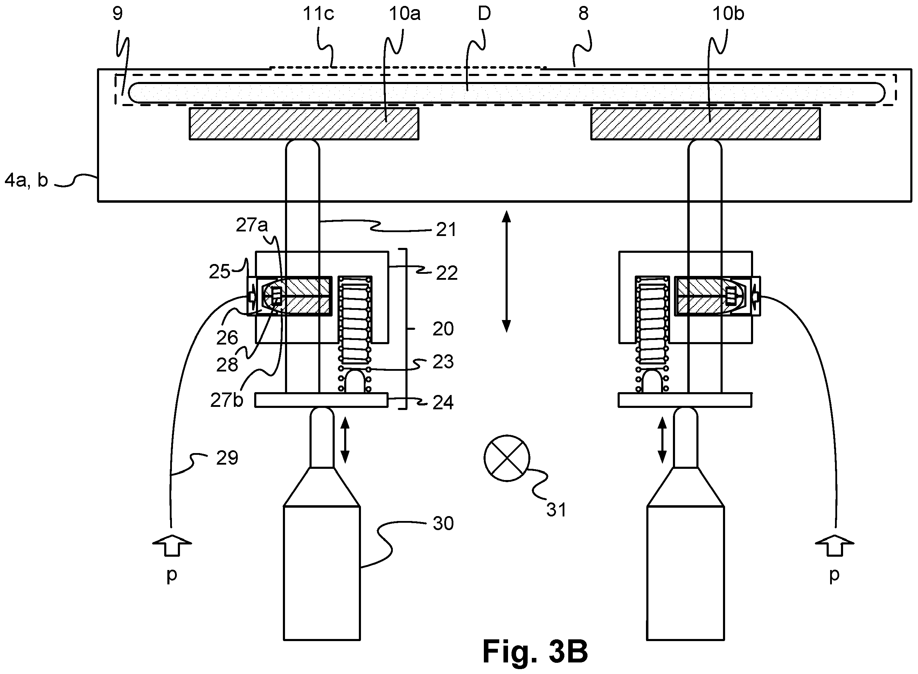

Des Weiteren ist in dem Gehäuse 8 zumindest ein, beispielsweise als Anpressplatte ausgebildetes, Anpresselement 10 vorgesehen, welches mittels Drucks aus einer Drucckammer 14, welche sich ebenfalls im Gehäuse 8 befindet, beaufschlagbar ist, um dadurch in Richtung des Dokumentenschachtes 9 unter Druck bewegt zu werden. Dadurch kann ein in dem Dokumentenschacht 9 befindliches Dokument D an die gegenüberliegende Innenwand des Gehäuses 8 (in Fig. 3 ist das die obenliegende Innenwand) gepresst und somit in der Dokumententrägereinrichtung 4a bzw. 4b fixiert werden.

Die Druckkammer 14 kann dazu mittels eines unter Druck gesetzten Gases, insbesondere im vorliegenden Beispiel Luft, über einen Gas- bzw. Lufteinlass 14a befüllt werden, insbesondere zu einem Zeitpunkt bzw. einer Stellung der Vorrichtung 1, an dem bzw. bei der sich die Dokumententrägereinrichtung 4a bzw. 4b in der Transferposition 6 befindet. Wenn hierin auf Luft oder Pneumatik Bezug genommen wird ist dies als auf Luft bzw. Druckluft einschränkt zu verstehen. Tatsächlich können auch andere geeignete Gase oder Gasgemische gleichermaßen verwendet werden, wie etwa Stickstoff.

Zur Druckluftbefüllung der Druckkammer kann an der Transferposition der Vorrichtung 1 eine Druckluftversorgung vorgesehen sein, welche Druckluft p durch eine Druckluftdüse 15 und über den zum Zwecke einer temporären luftdichten Verbindung passend geformten Lufteinlass 14a in die Druckkammer 14 zuführt, wenn die Dokumententrägereinrichtung 4a bzw. 4b die Transportposition 6 erreicht hat und dabei mit ihrem Lufteinlass 14a auf der Druckluftdüse 15 aufgesetzt hat.

In dem Lufteinlass 14a ist zudem ein Rückschlagventil 14b vorgesehen, welches dazu eingerichtet ist, die Druckkammer 14 nach ihrer Befüllung mit Druckluft p durch die Druckluftdüse 15 luftdicht zu verschließen. Auf diese Weise kann die Druckkammer 14 den von ihr, jedenfalls mittelbar (etwa über entsprechende Pneumatikelemente) auf das Anpresselement 10 ausgeübten Druck auch dann aufrechterhalten und somit das Dokument D fixieren, wenn die Dokumententrägereinrichtung 4a, b die Transferposition 6 zum Durchlaufen ihrer Bahnkurve verlassen hat und somit von der Druckluftversorgung an der Druckluftdüse 15 abgeschnitten ist.

Des Weiteren weist das Gehäuse 8 Gehäuseaussparungen 11a, b zur Einführung jeweils eines Zentrierelements 13a, b zum Ausrichten, insbesondere Zentrieren, des Dokuments D im Dokumentenschacht 9 vor der Fixierung durch das Anpresselement 10 auf. Die Zentrierelemente 13a bzw. 13b können insbesondere als einer oder mehrere Zentrierstifte ausgebildet sein, die durch die Gehäuseaussparung 11a bzw. 11b in das Gehäuse 8 der Dokumententrägereinrichtung 4a bzw. 4b, wenn diese sich an der Transferposition 6 befindet, eingreifen können, um die genannte Zentrierung mittels mechanischer Wechselwirkung mit dem Dokument D vorzunehmen. Dazu können die Zentrierstifte 13a und 13b, jeweils über einen linearen Aktuator 12a bzw. 12b, etwa einen Linearmotor oder einen Druckzylinder, angetrieben temporär in das Gehäuse 8 eingeführt werden. Die schräge Stellung der Aktuatoren ermöglicht es vorteilhaft sowohl das Einfahren der Zentrierstifte als auch das Zentrieren selbst mittels einer einzigen linearen Bewegung je Zentrierelement zu bewerkstelligen.

Schließlich weist das Gehäuse an seiner Oberseite noch zumindest eine Gehäuseaussparung zur Personalisierung des Dokuments auf, wenn sich dieses im Wirkbereich 2a befindet. So kann insbesondere eine Bedruckung des Dokuments D durch diese Gehäuseaussparung 11c hindurch erfolgen. Auch andere Prozessschritte sind auf gleiche Weise in Bezug auf das Dokument D durch diese Gehäuseaussparung 11c hindurch ausführbar, etwa ein Trocknen von zuvor aufgedruckter Tinte oder ein Kontaktieren des Dokuments D mit Schreib- oder Leseköpfen zum Schreiben bzw. Lesen von Daten in bzw. aus einem Datenspeicher des Dokuments D.

Fig. **3B** stellt schematisch eine Dokumententrägereinrichtung 4a bzw. 4b der Vorrichtung aus Fig. 1 sowie eine beispielhafte Fixierungseinrichtung dazu gemäß einer zweiten beispielhaften Ausführungsform dazu in einer Schnittansicht dar, bei der die Blickrichtung entlang der Transportrichtung 31 verläuft, entlang der die Dokumente D durch die Transporteinrichtung 5 zu bzw. von der Transferposition 6 transportiert werden. Bei dieser Ausführungsform sind als Teil der Dokumententrägereinrichtung 4a bzw. 4b mehrere Klemmmechanismen vorgesehen, deren Funktionsweise sich jedoch gegenüber dem der Fixiereinrichtung aus Fig. 3A unterscheidet. Ansonsten entspricht die Dokumententrägereinrichtung im Wesentlichen derjenigen aus Fig. 3A, einschließlich der jeweiligen Zentrierfunktionalität.

Anstelle eines einzigen Anpresselements sind bei dieser zweiten Ausführungsform zwei (alternativ auch mehr) Anpresselemente 10a bzw. 10b vorgesehen, um das Dokument D in der Dokumententrägereinrichtung 4a bzw. 4b wiederum durch Festpressen gegenüber der gegenüberliegenden Innenwand des Gehäuses 8 der Dokumententrägereinrichtung 4a bzw. 4b zu fixieren. Jedem der Anpresselemente 10a bzw. 10b ist ein eigener Klemmmechanismus zugeordnet, dessen Funktionsweise nun beispielhaft anhand des Klemmmechanismus für das Anpresselement 10a erläutert werden soll.

Das Anpresselement 10a ist über eine Kolbenstange 21 mit einer Fixiereinrichtung 20 gekoppelt, welche dazu vorgesehen ist, das Anpresselement 10a zum Zwecke der Fixierung des Dokuments D gegen dieses zu pressen und in dieser Lage relativ zur Dokumententrägereinrichtung zu fixieren, sowie zum nachfolgenden Freigeben des Dokuments nach dessen Personalisierung an der Transferposition 6 diese Fixierung temporär zu lösen, um einen Austausch des personalisierten Dokuments durch ein neues noch zu personalisierendes Dokument zu ermöglichen.

Die Fixiereinrichtung 20 weist eine Klemmeinheit 22 mit einem Führungskanal für die Kolbenstange 21 auf, in dem diese mittels einer Klemmpatrone 25 festgeklemmt werden kann. In der Klemmpatrone 25 ist ein Formstück 26 in einer senkrecht zur Kolbenstange 21 liegenden Richtung verschiebbar angeordnet. Des Weiteren sind in der Klemmpatrone 25 zwei spiegelbildlich zueinander ausgeprägte Klemmbacken 27a und 27b vorgesehen. In einem ersten Zustand, bei dem die Klemmbacken 27a und 27b nicht durch das Formstück 26 in eine bestimmte Position gezwungen werden, werden sie mittels einer in entsprechenden gegenüberliegenden Aussparungen der beiden Klemmbacken 27a und 27b liegenden Spreizfeder 28 voneinander weg gespreizt und dadurch gegeneinander sowie gegen die Kolbenstange 21 verkanntet. Auf diese Weise wird diesem ersten Zustand die Kolbenstange 21 durch die beiden Klemmbacken festgeklemmt und somit arretiert.

In einem anderen, zweiten Zustand, wird dagegen der Klemmpatrone 25 über eine Druckluftzuführung 29, die insbesondere als Druckluftschlauch oder -rohr ausgeführt sein kann, Druckluft p zugeführt, die in der Klemmpatrone 25 auf das Formstück 26 wirkt und dieses veranlasst, sich unter Druck im Wesentlichen senkrecht zur Kolbenstange 21 in Richtung der Klemmbacken 27a und 27b zu verschieben. Die beiden Klemmbacken 27a und 27b sind auf ihrer dem Formstück 26 zugewandten Seite so geformt, dass sie, wenn sie mit dem Formstück 26 in Kontakt kommen und durch dieses mit Druck beaufschlagt werden, aufeinander zu gepresst werden, sodass sie die Spreizfeder 28 zusammendrücken und schließlich eine im wesentlichen parallele Stellung zueinander einnehmen, wodurch die Verkanntung gegenüber der Kolbenstange 21 aufgehoben und diese freigegeben wird. Dadurch kann eine ebenfalls in der Klemmeinheit 22 vorgesehene und im Wesentlichen parallel zur Kolbenstange 21 verlaufende Druckfeder 23 wirken und dabei einen von der Dokumententrägereinrichtung weg (d.h. in Fig. 3B nach unten), gerichtete Kraft auf eine Grundplatte 24 der Klemmeinheit 22 ausgeübt werden. Da auch die Kolbenstange 21 auf dieser Grundplatte 24 mit ihrem dem Anpresselement 10a gegenüberliegenden Ende angebracht ist, wirkt diese Kraft auch auf die Kolbenstange 21 und das wiederum daran befestigte Anpresselement 10a, welches somit von dem Dokument D (in Fig. 3B nach unten) weggezogen wird und dieses somit freigibt.

Soll nun nach Austausch des Dokuments das neu aufgenommene Dokument D wieder fixiert werden, so wird die Grundplatte 24 zunächst mittels eines Kolbens 30, der insbesondere als pneumatischer oder motorisch betriebener Kolben ausgebildet sein kann, in Richtung des Dokuments D verfahren, sodass das Anpresselement 10a das Dokument D schließlich mit dem zur Fixierung vorgesehenen Druck beaufschlagt. Sodann wird die Druckluft in der Klemmpatrone 25 abgelassen, wodurch das Formstück 26 mittels einer Rückstellfeder (nicht dargestellt) wieder in seine ursprüngliche Position zurückbewegt wird, die beiden Klemmbacken 27a und 27b aufgrund der nun wieder wirksamen Spreizfeder 28 gegeneinander gespreizt und gegen die Kolbenstange 21 verkanntet werden und diese somit festklemmt wird. Somit ist wieder der erste Zustand der Fixiereinrichtung 20 erreicht.

Wenn nun die Bahnkurve der Dokumententrägereinrichtung 4a bzw. 4b erneut beginnt, bleibt das Dokument D während ihres Durchlaufs der Bahnkurve auf diese Weise im ersten Zustand fixiert bis beim erneuten Erreichen der Transferposition 6 wieder eine Überführung der Fixiereinrichtung 20 in den zweiten Zustand erfolgt, um den nachfolgenden Dokumentenaustausch zu ermöglichen.

Diese zweite Ausführungsform weist ebenfalls den Vorteil auf, dass die Dokumententrägereinrichtung 4a bzw. 4b während des Durchlaufs der Bahnkurve nicht mit Anschlüssen zum Zwecke der Fixierung des Dokuments D, etwa mit pneumatischen Schläuchen oder elektrischen Anschlüssen verbunden sein muss. Des Weiteren erlaubt diese Ausführungsform auch besonders schnelle Durchlaufzeiten bzw. hohe Taktraten, da anders als bei der Ausführungsform nach Fig. 3A ein zeitbeanspruchendes Auffüllen einer Drucckammer entfällt.

Das Zentrieren bzw. Ausrichten des jeweils neu aufgenommenen Dokuments D in der Transferposition 6 erfolgt auf gleiche Weise, wie bereits vorausgehend im Zusammenhang mit Fig. 3A beschrieben.

Die **Figuren 4 bis 6** stellen eine kombinierte Beschreibung von Ausführungsformen der erfindungsgemäßen Vorrichtung sowie des dazu korrespondierenden erfindungsgemäßen Verfahrens dar.

Die in **Fig. 4** schematisch dargestellten Varianten für den Verlauf der Bahnkurven der Dokumententrägereinrichtungen der Vorrichtung aus Fig. 1 ergeben sich bei einer ersten beispielhaften Ausführungsform der Erfindung, die aufgrund ihrer besonders kurzen Bahnkurvenlänge insbesondere im Hinblick auf eine Maximierung des erreichbaren Durchsatzes optimiert ist, aus drei aufeinanderfolgenden Bahnabschnitten 100-1 bis 100-3.

Insbesondere können dabei die Bahnkurven der Dokumententrägereinrichtungen 4a und 4b zusammenfallen oder aber zumindest im Wesentlichen parallel zueinander verlaufen. Dabei wird jedoch in beiden Fällen dieselbe Transferposition 6 im Rahmen der Bahnkurve erreicht, welche den Ort darstellt, an dem Dokumente, welche vom ersten Transportstreckenabschnitt 5a der Transporteinrichtung 5 zugeführt werden, in die entsprechende Dokumententrägereinrichtung 4a bzw. 4b geladen und nach ihrer jeweiligen Personalisierung auf den zweiten Transportstreckenabschnitt 5b der Transporteinrichtung 5 entladen werden.

Ausgehend von der Transferposition 6 auf Höhe der Transporteinrichtung 5 durchläuft jede der Dokumententrägereinrichtungen 4a bzw. 4b bei ihrem, vorzugsweise periodischen, Durchlaufen ihrer Bahnkurve einen ersten Bahnabschnitt 100-1, der von der Transferposition 6 zu einer Startposition 16 eines nachfolgenden Bahnabschnitts 100-2, in dem die Dokumentenpersonalisierung stattfindet, führt. Dieser erste Bahnabschnitt 100-1 kann wahlweise, insbesondere gemäß einer entsprechenden Ansteuerung durch die Steuerungseinrichtung 7, geradlinig verlaufen (Variante 100-1a) oder bogenförmig (Variante 100-1b). Auch andere Bahnkurvenformen sind jedoch denkbar, insbesondere auch Bahnkurven, die oberhalb der geradlinig verlaufenden Varianten 100-1a bogenförmig verlaufen und beispielsweise durch Achsenspiegelung an dieser aus Variante 1001b hervorgehen. Bei gleicher Durchlaufgeschwindigkeit ist bei der bogenförmig Variante 100-1b die Durchlaufzeit aufgrund der größeren Weglänge entsprechend länger. Dementsprechend kann mittels einer gezielten Auswahl der anzuwendenden Bahnabschnittsvariante 100-1a bzw. 100-1b durch die Steuerungseinrichtung 7, die Phase des Durchlaufs der Dokumententrägereinrichtung 4a bzw. 4b entlang ihrer Bahnkurve im Betrieb neu justiert bzw. korrigiert werden. Dies kann insbesondere dazu genutzt werden, unvorhergesehene Verzögerungen im Bewegungsablauf einer oder mehrerer der Dokumententrägereinrichtung 4a, b zu kompensieren, die von der Sensoreinrichtung 7a in Form von entsprechenden Bewegungsparametern, wie Position, Geschwindigkeit, Beschleunigung, erfasst wurden. An der Startposition 16 kann zudem eine Inspektionseinrichtung 16a, insbesondere eine Kamera, vorgesehen sein, die dazu dient, die relative Lage des Dokuments in der jeweiligen Dokumententrägereinrichtung zu erfassen und direkt, oder indirekt, etwa über die Steuerungseinrichtung 7, an die Personalisierungseinrichtung 2 zu übermitteln. Letztere kann dann auf Basis dieser Informationen die Vornahme der Personalisierung, insbesondere hinsichtlich einer Ausrichtung derselben relativ zu dem Dokument, entsprechend berücksichtigen, insbesondere anpassen.

Es folgt sodann der zweite Bahnabschnitt 100-2, in dem die Dokumententrägereinrichtung 4a, b von der Startposition 16 durch den Wirkbereich 2a der Personalisierungseinrichtung 2 hindurch, in dem die Personalisierung des Dokuments stattfindet, zu einer Endposition 17 dieses Bahnabschnitts bewegt wird. Bei weiteren Varianten für den Verlauf der Bahnkurve der Dokumententrägereinrichtungen durchläuft die Bahnkurve den Wirkbereich 2a der Personalisierungseinrichtung 2 mehrfach. Dies kann insbesondere so erfolgen, dass der zweite Bahnabschnitt um die wiederum zwischen der Startposition 16 und der Endposition 17 liegenden Abschnitte 100-2a und 100-2b verlängert wird. Letztere können auch mehrfach als Verlängerungen angehängt sein. Es kommt somit bei diesen Varianten insgesamt zu einem mehrfachen Durchlaufen des Wirkbereichs, wobei insbesondere verschiedene Personalisierungen des durch die jeweilige Dokumententrägereinrichtung transportierten Dokuments erfolgen können, wie etwa ein oder mehrere Bedruckungen, Laserbearbeitungen, Magnetisierungen, Perforationen usw.

Von der Endposition aus folgt nach dem Durchlaufen des zweiten Bahnabschnitts der dritte Bahnabschnitt 100-3 zur Rückführung der Dokumententrägereinrichtung 4a bzw. 4b zur Transferposition 6. Auch für diesen dritten Bahnabschnitt 100-3 können zumindest zwei verschiedene Bahnkurvenvarianten vorgesehen sein, insbesondere wieder eine geradlinige Variante 100-3a sowie eine bogenförmige Variante 100-3b oder auch wieder eine bogenförmige Variante oberhalb der jeweiligen geradlinigen Variante. Das vorausgehend bezüglich des ersten Bauabschnitts hinsichtlich der Auswahlmöglichkeit aus diesen Varianten Gesagte trifft auf den dritten Bahnabschnitt 100-3 gleichermaßen zu.

Die Bewegung der Dokumententrägereinrichtungen 4a bzw. 4b entlang der in Fig. 4 illustrierten Bahnkurve kann insbesondere gemäß einem Systemtakt getaktet erfolgen. Dies kann beispielsweise, wie dargestellt, so erfolgen, dass eine erste Dokumententrägereinrichtung, beispielsweise die Dokumententrägereinrichtung 4a, in einem ersten Takt t1 den ersten Bahnabschnitt 100-1 durchläuft, um zur Position 16 zu gelangen, während gleichzeitig die andere Dokumententrägereinrichtung 4b von der Position 17 kommend auf dem Bahnabschnitt 100-3 auf dem Rückweg zur Transferposition 6 ist. In einem unmittelbar nachfolgenden zweiten Takt t2 durchläuft die erste Dokumententrägereinrichtung 4a sodann den zweiten Bahnabschnitt 100-2, in dem die Personalisierung des in dieser Dokumententrägereinrichtung aufgenommenen Dokuments erfolgt, während gleichzeitig an der zweiten Dokumententrägereinrichtung 4b, welche zu diesem Zeitpunkt die Transferposition 6 erreicht hat und dort ruht, das bislang in dieser Dokumententrägereinrichtung 4b aufgenommene Dokument an den zweiten Transportstreckenabschnitt 5b der Transporteinrichtung 5 ausgegeben und gleichzeitig oder unmittelbar nachfolgend ein neues Dokument von dem ersten Transportstreckenabschnitt 5a der Transporteinrichtung 5 in diese Dokumententrägereinrichtung 4b für einen erneuten Durchlauf aufgenommen wird.

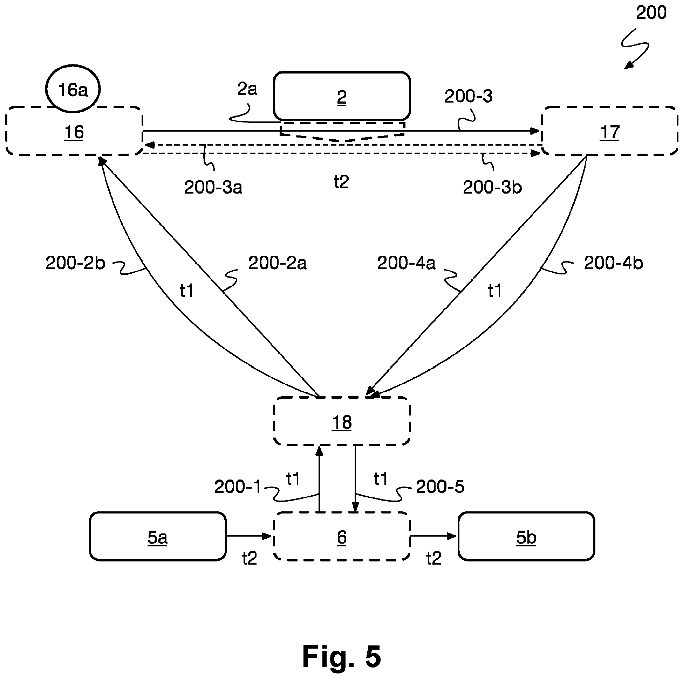

In **Fig. 5** ist eine zu Fig. 4 alternative Ausführungsform 200 mit geändertem Verlauf der Bahnkurve der Dokumententrägereinrichtungen 4a bzw. 4b der Vorrichtung 1 illustriert. Diese Ausführungsform unterscheidet sich von derjenigen aus Fig. 4 vor allem dadurch, dass oberhalb der Transferposition 6 eine erste Zwischenposition 18 entlang der Bahnkurve vorgesehen ist, wobei zwischen der Transferposition 6 und dieser ersten Zwischenposition 18 in beiden Richtungen eine geradlinige Bewegung der Dokumententrägereinrichtungen 4a und 4b erfolgt. Beim Durchlaufen der Bahnkurve, ausgehend von der Transferposition 6, durchläuft jede der Dokumententrägereinrichtungen 4a und 4b somit zunächst einen geraden Bahnabschnitt 200-1 bis zur ersten Zwischenposition 18, bevor von dort ausgehend eine der in Fig. 4 beschriebenen Bahnkurve gleichende Bewegung entlang eines zweiten Bahnabschnitts 200-2a oder 200-2b, eines dritten Bahnabschnitts 200-3 und eines vierten Bahnabschnitts 200-4a bzw. 200-4b zurück zur ersten Zwischenposition 18 erfolgt. Schließlich folgt noch der geradlinige fünfte Abschnitt 200-5, der zurück zur Transferposition 6 führt.

Auch hier ist wiederum ein getakteten Betrieb denkbar, der insbesondere so verlaufen kann, dass die jeweilige Dokumententrägereinrichtung 4a bzw. 4b in einem ersten Takt t1 die ersten und zweiten Bahnabschnitte 200-1 und 200-2 bis hin zur Position 16 durchläuft, während gleichzeitig die jeweils andere Dokumententrägereinrichtung 4b bzw. 4a von der Position 17 kommend den vierten Bahnabschnitt 200-4 und den fünften Bahnabschnitt 200-5 zurück zur Transferposition 6 durchläuft. Im nachfolgenden zweiten Takt t2 erfolgt wiederum einerseits die Weiterbewegung der zu Taktbeginn an der Position 16 befindlichen Dokumententrägereinrichtung 4a bzw. 4b entlang des dritten Bahnabschnitts 200-3 sowie andererseits das Entladen und Beladen der während dieses Takts an der Transferposition 6 verweilenden anderen Dokumententrägereinrichtung 4b bzw. 4a. Die Bahnabschnitte 200-2 und 200-4 können wieder, ähnlich wie in Fig. 4, eine geradlinige Variante 200-2a bzw. 200-4a und eine bogenförmige Variante 200-2b bzw. 200-4b oder auch wieder eine bogenförmige Variante oberhalb der jeweiligen geradlinigen Variante aufweisen. Auch andere verschiedenlange Variantenverläufe sind wieder denkbar.

Die Ausführungsform gemäß Fig. 5 hat gegenüber derjenigen aus Fig. 4 den Vorteil, dass die Dokumententrägereinrichtungen aufgrund der Einführung der ersten Zwischenposition 18, zumindest im Wesentlichen, senkrecht in die bzw. aus der Transferposition 6 verfahren werden, sodass sich tangentiale Bewegungsanteile, welche insbesondere angesichts der mit den erwünschten kurzen Durchlaufzeiten einhergehenden schnellen Bewegungen potenziell zu Beschädigungen an der Transporteinrichtung 5 oder der Druckluftdüse 15 oder dem Drucklufteinlass 14a aus Fig. 3 führen könnten, vermieden werden. Auch kann dazu die Geschwindigkeit der Bewegung in den Bahnabschnitten 200-1 und 200-5 gegenüber der Bahngeschwindigkeit auf einem oder mehreren der anderen Bahnabschnitte verringert werden.

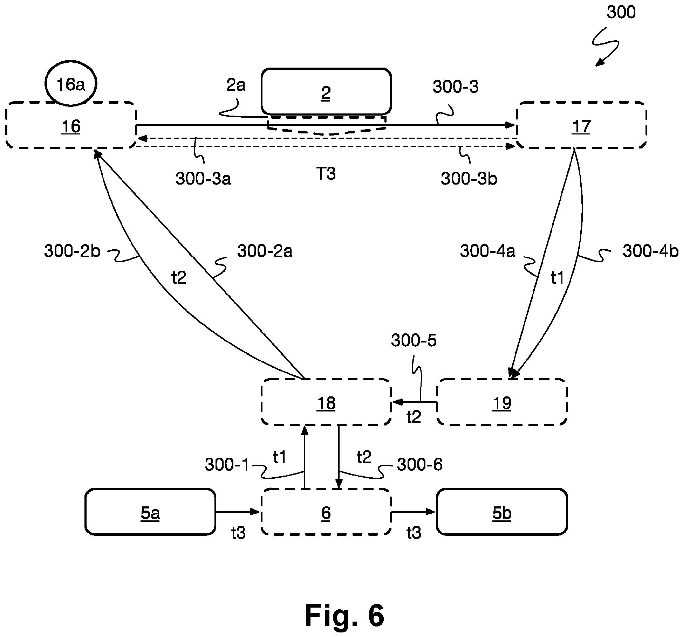

In **Fig. 6** ist eine zu den Figuren 4 und 5 alternative weitere Ausführungsform 300 mit weiter geändertem Verlauf der Bahnkurve der Dokumententrägereinrichtungen 4a und 4b der Vorrichtung 1 illustriert. Diese Ausführungsform unterscheidet sich von derjenigen aus Fig. 5 vor allem dadurch, dass zusätzlich im Rückweg von der Position 17 zur Transferposition 6 eine der ersten Zwischenpositionen 18 vorgelagerte zweite Zwischenpositionen 19 vorgesehen ist, die insbesondere auf gleicher Höhe wie diese liegen kann. Die Bewegungskurve teilt sich hier somit in sechs Bahnabschnitte auf, wobei der erste Bahnabschnitt 300-1 von der Transferposition 6 zur ersten Zwischenpositionen 18, der zweite Bahnabschnitt 300-2 von dort aus zur Position 16, der dritte Bahnabschnitt 300-3 von dort aus zur Position 17, der vierte Bahnabschnitt 300-4 von dort aus zur zweiten Zwischenposition 19, der fünfte Bahnabschnitt 300-5 von dort aus zurück zur ersten Zwischenposition 18, und schließlich der sechste Bahnabschnitt 300-6 von dort aus zurück zur Transferposition 6 führt, um die Bahnkurve zu schließen. Die Bahnabschnitte 300-2 und 300-4 können wieder, ähnlich wie in Fig. 4, eine geradlinige Variante 300-2a bzw. 300-4a und eine bogenförmige Variante 300-2b bzw. 300-4b oder auch wieder eine bogenförmige Variante oberhalb der jeweiligen geradlinigen Variante aufweisen. Auch andere verschiedenlange Variantenverläufe sind wieder denkbar.

Auch hier ist wieder ein getakteter Betrieb möglich, insbesondere so, dass (i) im ersten Takt t1 eine erste der Dokumententrägereinrichtungen 4a bzw. 4b den ersten Bahnabschnitt 300-1 durchläuft, während gleichzeitig die zweite Dokumententrägereinrichtung 4b bzw. 4a den vierten Bahnabschnitt durchläuft, (ii) im nachfolgenden zweiten Takt t2 die erste Dokumententrägereinrichtung 4a bzw. 4b den zweiten Bahnabschnitt 300-2 durchläuft, während gleichzeitig die zweite Dokumententrägereinrichtung 4b,a den fünften Bahnabschnitt 300-5 und anschließend den sechsten Bahnabschnitt 300-6 durchläuft, und (iii) im nachfolgenden dritten Takt t3 die erste Dokumententrägereinrichtung 4a bzw. 4b den dritten Bahnabschnitt 300-3 durchläuft, während gleichzeitig die zweite Dokumententrägereinrichtung 4b bzw. 4a an der Transferposition 6 verweilt und dort Be- und Entladen wird.

Durch Einführung dieser zweiten Zwischenposition 19 lässt sich die Betriebssicherheit der Vorrichtung 1, insbesondere im Hinblick auf die Vermeidung von Kollisionen der Dokumententrägereinrichtungen 4a und 4b, weiter erhöhen. Dies ergibt sich insbesondere daraus, dass gemäß der vorausgehend beschriebenen Taktung, anders als bei zur Ausführungsform aus Fig. 5 beschriebenen Taktung, der zu den Bahnabschnitten 300-1 und 300-6 korrespondierende Bahnkurvenbereich von den beiden Dokumententrägereinrichtungen 4a, 4b stets taktversetzt durchlaufen wird. Ein Vorteil dieser zweiten Zwischenposition ergibt sich insbesondere auch dann, wenn in der Vorrichtung mehr als zwei Dokumententrägereinrichtungen vorgesehen sind oder wenn es beim Bewegungsablauf einer Dokumententrägereinrichtung, die sich gerade an der Transferposition befindet, zu Verzögerungen im Prozessablauf kommt. In beiden Fällen kann die nächstfolgende Dokumententrägereinrichtung an der zweiten Zwischenposition warten, bis die Transferposition wieder freigeworden ist, so dass auch in diesen Fällen Kollisionen von Dokumententrägereinrichtungen effektiv verhindert werden können.

Jede der Dokumententrägereinrichtungen 4a bzw. 4b kann auch so ausgelegt sein, dass sie um 180 Grad rotierbar ist, um neben der vorausgehend beschriebenen Bearbeitung der Vorderseite des Dokuments auch eine, insbesondere gleichartige, Bearbeitung der Rückseite des zu personalisierenden Dokuments durch die Vorrichtung 1 zu ermöglichen.

Zudem ist es möglich, wie schon vorausgehend insbesondere unter Bezugnahme auf Fig. 4 erläutert, dass die Vorrichtung 1 so konfiguriert ist, dass die Bahnkurven der Dokumententrägereinrichtungen 4a bzw. 4b im Bereich zwischen den Positionen 16 und 17 eine mehrfache Bewegungsumkehr enthalten, um die jeweilige Dokumententrägereinrichtung 4a bzw. 4b zwischen mehreren Bearbeitungsstationen der Personalisierungseinrichtung oder gegebenenfalls mehreren separaten Personalisierungseinrichtungen hin- und her zu bewegen, um das jeweilige Dokument in der entsprechenden Dokumententrägereinrichtung 4a bzw. 4b mit einer mehrstufig zu erzeugenden Personalisierung oder mit einer Mehrzahl von, insbesondere verschiedenen, Personalisierungen zu versehen.

Bei diesen Ausführungsvarianten mit einem mehrfachen Durchlaufen des Wirkbereichs 2a während eines Bahnkurvendurchlaufs ist es auch möglich, dass die Vorrichtung so konfiguriert ist, dass während sich eine erste Dokumententrägervorrichtung 4a im Wirkbereich 2a der Personalisierungsvorrichtung 2 befindet, die Bewegung einer zweiten Dokumententrägervorrichtung 4b verlangsamt wird. Dies kann insbesondere so vorgesehen sein, dass dann die Bahngeschwindigkeit der zweiten Dokumententrägervorrichtung 4b verringert wird und/oder in dem, wie schon beschrieben, die Bahnkurve durch Auswahl von entsprechend längeren Bahnabschnitten (z.B. Bahnabschnitte 100-1b, 200-2b, 300-2b bzw. 100-3b, 200-4b, 300-4b) anstelle von kürzeren (z.B. Bahnabschnitte 100-1a, 200-2a, 300-2a bzw. 100-3a, 200-4a, 300-4a) verlängert wird, um die Ankunftszeit der zweiten Dokumententrägervorrichtung 4b an der Startposition 16 zu verzögern und somit der ersten Dokumententrägervorrichtung 4a genügend Zeit für das mehrfache Durchlaufen des Wirkbereichs 2a zu geben (und umgekehrt). Auch ist es möglich, den Prozess des Beladens (Dokument aufnehmen) und Entladens (Dokument ausgeben) der Dokumententrägervorrichtungen 4a,b an der Transferposition 6 entsprechend anzupassen (verlangsamen).

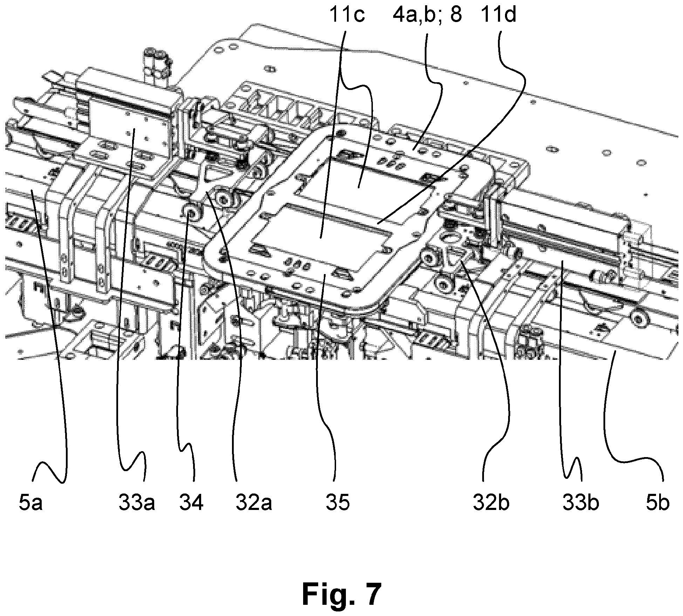

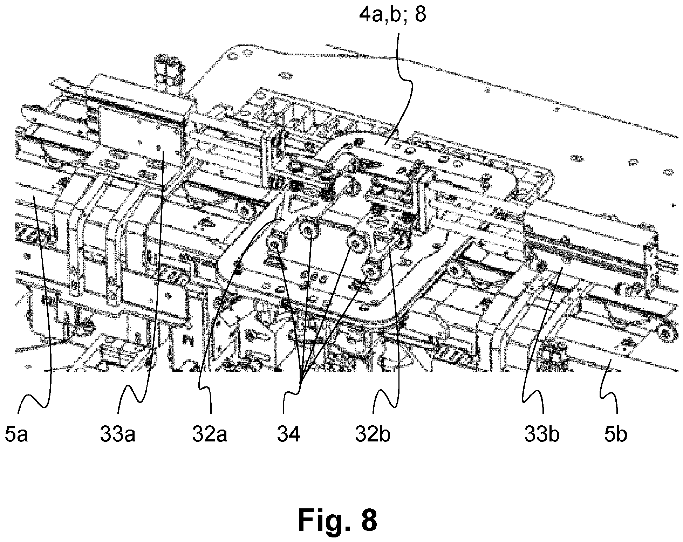

Die **Figuren 7** **und** **8** zeigen jeweils eine Detailansicht der Transferposition 6 und ihrer unmittelbaren Umgebung bei einer bevorzugten Ausführungsform einer erfindungsgemäßen Vorrichtung 1 mit einer Niederhaltereinrichtung zur Unterstützung des Beladens und Entladens der Dokumententrägervorrichtungen, wobei die Niederhaltereinrichtung in **Fig. 7** in einem deaktivierten Zustand und in **Fig. 8** in einem aktivierten Zustand gezeigt ist.

Zudem weist die (sichtbare) Oberseite des Gehäuses 8 der an der Transferposition 6 gezeigten beispielhaften Dokumententrägervorrichtung 4a (bzw. 4b) zwei großflächige Gehäuseaussparungen 11c auf, die durch einen zwischen ihnen verlaufenden Zwischensteg 11d voneinander separiert sind, und die so konfiguriert sind, dass durch sie hindurch im Wirkbereich 2a eine Personalisierung des Dokuments D in der Dokumententrägervorrichtung 4a erfolgen kann. Die beiden Gehäuseaussparungen 11c können insbesondere so konfiguriert, insbesondere dimensioniert und angeordnet, sein, dass ein in der Dokumententrägervorrichtung 4a aufgenommenes buchförmiges Dokument D, wie etwa ein Reisepass, in der Dokumententrägervorrichtung 4a so zu liegen kommt, dass zwei nebeneinanderliegende Seiten des aufgeschlagenen buchförmigen Dokuments D gleichzeitig oder unmittelbar nacheinander personalisiert werden können, wobei je eine der aufgeschlagenen Seiten durch eine zugeordnete der beiden Gehäuseaussparungen 11c größtenteils freigelegt, jedoch zugleich von der Oberseite des Gehäuses 8 im Zusammenspiel mit dem Zwischensteg 11d rahmenförmig umgeben und somit fixiert wird. So wird eine besonders effiziente Personalisierung des fixierten buchförmigen Dokuments D durch die jeweilige Gehäuseaussparungen 11c hindurch ermöglicht. Insbesondere wird so eine (nahezu) vollflächige Passpersonalisierung der zwei nebeneinanderliegenden aufgeschlagenen Passseiten möglich. Beispielsweise ist es so möglich, die kompletten Personen- bzw. Halterdaten mit Passfoto auf die Datenseite (Holderpage) zu drucken bzw. mittels Laserbehandlung aufzubringen und/oder die andere Passseite daneben (z.B. Papierseite bzw. Seite 3 im Falle eines deutschen Reisepasses), ebenfalls mit einem zusätzlichen Passfoto und/oder zusätzlichen Nutzerdaten zu bedrucken.

Die Niederhaltereinrichtung, ist so eingerichtet, dass sie beim Betrieb der Vorrichtung temporär, wenn sich eine der Dokumententrägereinrichtungen 4a, b an der Transferposition 6 befindet, durch deren Gehäuseaussparungen 11c hindurch eine Führungskraft auf das Dokument D auszuüben, um dieses zumindest stellenweise niederzuhalten, während es gerade in die Kavität 9 des Gehäuses 8 aufgenommen oder daraus ausgegeben wird. Die Niederhaltereinrichtung weist zumindest eine Baugruppe, vorzugsweise - wie in den Figuren 7 und 8 dargestellt - beidseitig der Transferposition 6 eine jeweilige Baugruppe auf. Jede Baugruppe weist dabei einen mit Führungsrollen 34 zur physischen Kontaktierung mit dem Dokument D versehenen Niederhalter 32a bzw. 32b sowie einen Niederhalterantrieb zur Aktivierung bzw. Deaktivierung des zugeordneten Niederhalters 32 a, bzw. 32b auf. Die Führungsrollen 34 können insbesondere aus Silikon oder Kunststoff gefertigt sein. Während des Dokumententransfers beim Aufnehmen und Ausgeben des Dokuments D sorgen die Führungsrollen 34 für eine geringe Reibung, so dass trotz der großflächigen Gehäuseaussparungen 11c eine ausreichend hohe kurze Prozesszeit für den Dokumententransfer sowie eine Schonung des Dokuments D beim Transfer erreicht werden können.

Wie in Fig. 8 dargestellt, sind die Niederhalter 32a,b im aktivierten Zustand aus dem in Fig. 7 dargestellten Zustand heraus über die Gehäuseaussparungen 11c gefahren, so dass die Führungsrollen durch die Gehäuseaussparungen 11c hindurch greifen und bei den Vorgängen des Aufnehmens und Ausgebens des Dokuments D in bzw. aus der Dokumententrägervorrichtung 4a das Dokument D mit den Führungsrollen kontaktieren und unter Druckbeaufschlagung niederhalten, was insbesondere im Zusammenspiel mit einem oder mehreren der o.g. Anpresselemente 10 erfolgen kann. So wird insbesondere der Gefahr begegnet, dass das Dokument beim Aufnehmen oder Ausgeben an einer Kante der Gehäuseaussparungen 11c oder im Bereich des Abtransportes 5b an Transportführungen sich verfangen oder anstoßen könnte.

Die Vorrichtung ist des Weiteren so konfiguriert, dass sie, wenn der Aufnahme- bzw. Ausgabeprozess beendet ist, die Niederhalteeinrichtung wieder in den deaktivierten Zustand gemäß Fig. 7 überführt, so dass die Dokumententrägervorrichtung 4a wieder von der Niederhalteeinrichtung ungestört den nächsten Bahnkurvendurchlauf antreten kann. Niederhalter werden über Hubzylinder jeweils zu- und voneinander weg angetrieben. Alternativ könnte nur ein Niederhalter entweder über den ersten Transportstreckenabschnitt 5a zur Zuführung von Dokumenten oder über zweiten Transportstreckenabschnitt 5b zum Abtransport von Dokumenten vorgesehen werden.

Der Betrieb der Niederhaltereinrichtung kann insbesondere nach folgendem Prozessschema verlaufen:
1. Wenn eine Dokumententrägervorrichtung 4a nach dem Durchlaufen der Bahnkurve an der Transferposition 6 ankommt, wird die Niederhaltereinrichtung aktiviert, wodurch sich die Niederhalter 32a, b von ihrer jeweiligen Seite her gleichzeitig aufeinander zu und dabei über die Gehäuseaussparungen 11c der Dokumententrägervorrichtung 4a bewegen.
2. Das in der Dokumententrägervorrichtung 4a befindliche und bereits personalisierte Dokument wird aus der Dokumententrägervorrichtung 4a ausgegeben und das nächste noch nicht personalisierte Dokument D wird in die nunmehr gerade freigewordene Dokumententrägervorrichtung 4a aufgenommen.
3. Das noch nicht personalisierte Dokument D wird in der Dokumententrägervorrichtung 4a zentriert und geklemmt (wie vorausgehend beschrieben).
4. Die Niederhaltereinrichtung wird deaktiviert, sodass die Niederhalter 32 a,b wieder in ihre Ausgangsstellung gemäß Fig. 7 zurückbewegt werden und dabei die Transferposition 6 freigeben, wodurch die neu beladene Dokumententrägervorrichtung 4a die Transferposition 6 für einen erneuten Bahndurchlauf unbehindert verlassen kann.

Ansonsten kann die Vorrichtung aus den Fig. 7 und 8 insbesondere der Vorrichtung 1 aus Fig. 1 entsprechen.

Die Dokumententrägereinrichtung 4a kann zudem so konfigurierbar ausgestaltet sein, dass die Gehäuseoberseite eine auswechselbare Platte (Maske) 35 mit der zumindest einen Gehäuseaussparung 11c aufweist, so dass je nach Dokumentenart und/oder vorgesehener Personalisierung durch Umrüsten der Dokumententrägereinrichtung 4a mittels Maskentauschs auf einfache Weise eine entsprechende Anpassung der Vorrichtung erfolgen kann. Die Personalisierungsvorrichtung 2 kann optional auch quer zur Bewegung der Dokumententrägereinrichtungen 4a,b verfahrbar eingerichtet sein, um das Dokument D bzw. die nebeneinander liegenden Seiten des Dokuments zu personalisieren, während diese sich in dem Wirkbereich 2a befinden bzw. während die jeweilige Dokumententrägereinrichtung 4a,b den Wirkbereich 2a durchläuft.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken.

### BEZUGSZEICHENLISTE

- 1: Vorrichtung zur Personalisierung von Dokumenten
- 2: Personalisierungseinrichtung
- 2a: Wirkbereich der Personalisierungseinrichtung
- 3a: erste Verfahreinheit
- 3b: zweite Verfahreinheit
- 4a: erste Dokumententrägereinrichtung, im Wirkbereich der Personalisierungseinrichtung positioniert
- 4b: zweite Dokumententrägereinrichtung, an der Transferposition positioniert
- 5: Transporteinrichtung
- 5a: erster Transportstreckenabschnitt zur Zuführung von Dokumenten
- 5b: zweiter Transportstreckenabschnitt zum Abtransport von Dokumenten
- 6: Transferposition
- 7: Steuerungseinrichtung
- 7a: Sensoreinrichtung zur Erfassung von Bewegungsparametern
- 8: Gehäuse der Dokumententrägereinrichtung
- 9: Kavität bzw. Dokumentenschacht zur Aufnahme eines Dokuments
- 10: Anpresselement, insbesondere Anpressplatte
- 10a, b: Anpresselemente, insbesondere Anpressplatten
- 11a, b: Gehäuseaussparungen zur Einführung eines Zentrierstifts 13a, 13b
- 11c: Gehäuseaussparung zur Personalisierung des Dokuments D
- 11d: Zwischensteg
- 12a, b: lineare Aktuatoren zur Bewegung der Zentrierstifte 13 a, b
- 13a, b: Zentrierstifte
- 14: Druckkammer
- 14a: Drucklufteinlass der Druckkammer
- 14b: Rückschlagventil zur Abdichtung des Drucklufteinlasses 14 a
- 15: Druckluftdüse zur Zuführung von Druckluft zur Druckkammer
- 16: Startposition des Bahnabschnitts für die Dokumentenpersonalisierung
- 16a: Inspektionseinrichtung
- 17: Endposition des Bahnabschnitts für die Dokumentenpersonalisierung
- 18: erste Zwischenposition
- 19: zweite Zwischenposition
- 20: Fixiereinrichtung
- 21: Kolbenstange
- 22: Klemmeinheit
- 23: Druckfeder
- 24: Grundplatte
- 25: Klemmpatrone
- 26: verschiebbares Formstück
- 27a, b: Klemmbacken
- 28: Spreizfeder
- 29: Druckluftschlauch oder Druckluftrohr
- 30: pneumatischer oder motorischer Kolben
- 31: Transportrichtung des Dokuments D entlang der Transporteinrichtung 5
- 32a, b: Niederhalter
- 33a, b: Niederhalterantriebe
- 34: Führungsrollen
- 35: Gehäuseplatte bzw. Maske

- 100: erste Ausführungsform
- 100-k: Bahnabschnitte der ersten Ausführungsform, k = 1a bis 3b
- 200: zweite Ausführungsform
- 200-m: Bahnabschnitte der zweiten Ausführungsform, m = 1 bis 5
- 300: dritte Ausführungsform
- 300-n: Bahnabschnitte der dritten Ausführungsform, n = 1 bis 6

- D: Dokument
- p: Druckluft
- t1: erster Takt
- t2: zweiter Takt
- t3: dritter Takt

## Patentansprüche

1. Vorrichtung (1) zum Personalisieren von Dokumenten (D), wobei die Vorrichtung (1) aufweist:
eine Personalisierungseinrichtung (2) zum Versehen eines zu personalisierenden Dokuments, welches sich in einem Wirkbereich (2a) der Personalisierungseinrichtung (2) befindet, mit ihm zugeordneten Personalisierungsinformationen;
eine Verfahreinrichtung (3a,3b) mit zumindest zwei verfahrbaren Dokumententrägereinrichtungen (4a;4b), von denen jede konfiguriert ist:
ein zu personalisierendes Dokument (D) an einer für alle Dokumententrägereinrichtungen (4a;4b) gleichen Transferposition (6) der Vorrichtung (1) aufzunehmen;
das aufgenommene Dokument (D) zu seiner Personalisierung in den Wirkbereich (2a) der Personalisierungseinrichtung (2) zu bewegen; und
das aufgenommene Dokument (D) nach dessen Personalisierung zurück zu der Transferposition (6) zu bewegen und dort auszugeben;
wobei die Verfahreinrichtung (3a,3b) konfiguriert ist, bei ihrem Betrieb die Dokumententrägereinrichtungen (4a;4b) jeweils entlang einer jeweils zugeordneten geschlossenen schleifenförmigen Bahnkurve zwischen der Transferposition (6),
dem Wirkbereich (2a) und wiederum der Transferposition (6) zu verfahren, wobei die Verfahrbewegung jeder der einzelnen Dokumententrägereinrichtungen (4a;4b) entlang von ihrer Bahnkurve so zeitlich versetzt zur gleichsinnigen jeweiligen Verfahrbewegung jeder anderen der Dokumententrägereinrichtungen (4a;4b) erfolgt, dass die Dokumententrägereinrichtungen (4a;4b) bei ihren jeweiligen Verfahrbewegungen entlang der Bahnkurve nicht miteinander kollidieren;
eine Steuerungseinrichtung (7) zum Steuern der Vorrichtung (1), und
eine Sensoreinrichtung (7a), die konfiguriert ist, an einem oder mehreren bestimmten Punkten entlang der jeweiligen Bahnkurven einen oder mehrere aktuelle Bewegungsparameter der Dokumententrägereinrichtungen (4a;4b) zu detektieren und an die Steuerungseinrichtung (7) zu übermitteln;
wobei die Steuerungseinrichtung (7) konfiguriert ist, die Vorrichtung (1) in Abhängigkeit von diesen jeweiligen Bewegungsparametern zu steuern,
wobei die Verfahreinrichtung (3a,3b) eingerichtet ist, die Bahnkurve zumindest einer der Dokumententrägereinrichtungen (4a;4b) in Abhängigkeit von einer entsprechenden auf den Bewegungsparametern basierenden Ansteuerung durch die Steuerungseinrichtung (7) zu variieren.

2. Vorrichtung (1) nach Anspruch 1, des Weiteren aufweisend eine Transporteinrichtung (5), die eingerichtet ist, entlang einer Transportstrecke (5a, 5b) ein zu personalisierendes Dokument (D) der Transferposition (6) zur Aufnahme desselben durch eine der Dokumententrägereinrichtungen (4a;4b) zuzuführen und ein bereits von der Personalisierungseinrichtung (2) personalisiertes und an der Transferposition (6) von einer der Dokumententrägereinrichtungen (4a;4b) ausgegebenes Dokument (D) von der Transferposition (6) wegzuführen.

3. Vorrichtung (1) nach Anspruch 2, wobei die Verfahreinrichtung (3a,3b) beidseitig der Transportstrecke (5a, 5b) jeweils eine Verfahreinheit (3a; 3b) zum Verfahren von zumindest einer der Dokumententrägereinrichtungen (4a;4b) entlang ihrer jeweiligen Bahnkurve aufweist.

4. Vorrichtung (1) nach einem der vorausgehenden Ansprüche, wobei die Vorrichtung (1) des Weiteren konfiguriert ist, die jeweiligen Verfahrbewegungen der Dokumententrägereinrichtungen (4a;4b) entlang ihrer jeweiligen Bahnkurve so durchzuführen, dass zumindest an der Transferposition (6) ein Zwischenstopp erfolgt.

5. Vorrichtung (1) nach einem der vorausgehenden Ansprüche, wobei die zeitliche Versetzung der Bewegungen der Dokumententrägereinrichtungen (4a;4b) entlang ihrer jeweiligen Bahnkurve so festgelegt ist, dass sich zu dem Zeitpunkt, an dem sich eine der Dokumententrägereinrichtungen (4a;4b) an der Transferposition (6) befindet, gleichzeitig eine andere der Dokumententrägereinrichtungen (4a;4b) im Wirkbereich (2a) der Personalisierungseinrichtung (2) befindet.

6. Vorrichtung (1) nach einem der vorausgehenden Ansprüche, wobei die Vorrichtung (1) des Weiteren konfiguriert ist:
wenn sich eine der Dokumententrägereinrichtungen (4a;4b) an der Transferposition (6) befindet, ein gegenwärtig von dieser Dokumententrägereinrichtung (4a;4b) getragenes und bereits vorausgehend durch die Personalisierungseinrichtung (2) personalisiertes Dokument (D) auszugeben und an dessen Stelle ein weiteres, noch durch die Personalisierungseinrichtung (2) zu personalisierendes anderes Dokument in diese Dokumententrägereinrichtung (4a;4b) aufzunehmen, bevor diese ihre Bewegung für einen erneuten Durchlauf ihrer Bahnkurve fortsetzt.

7. Vorrichtung (1) nach einem der vorausgehenden Ansprüche, wobei die Bahnkurve zumindest einer der Dokumententrägereinrichtungen (4a;4b) so festgelegt ist, dass beim Betrieb der Vorrichtung (1) diese Bahnkurve einen je Bahnkurvendurchlauf zweifach durchlaufenen Kurvenabschnitt (200-1, 200-5; 300-1, 300-6) zwischen der Transferposition (6) und einer ersten Zwischenposition (18) aufweist, wobei dieser Kurvenabschnitt (200-1, 200-5; 3001, 300-6) einerseits im Rahmen einer Weg-Bewegung dieser Dokumententrägereinrichtung von der Transferposition (6) zur ersten Zwischenposition (18) und andererseits zeitlich versetzt dazu und in entgegengesetzter Richtung im Rahmen einer Hin-Bewegung der Dokumententrägereinrichtung (4a;4b) von der ersten Zwischenposition (18) zur Transferposition (6) während des gleichsinnigen Durchlaufens der schleifenförmigen Bahnkurve von dieser Dokumententrägereinrichtung (4a;4b) durchlaufen wird.

8. Vorrichtung (1) nach Anspruch 7, wobei:
die Bahnkurve der zumindest einen Dokumententrägereinrichtung des Weiteren eine zwischen dem Wirkbereich (2a) und der ersten Zwischenposition (18) gelegene zweite Zwischenposition (19) aufweist; und
die Vorrichtung (1) des Weiteren konfiguriert ist, eine im Rahmen der Wegbewegung von der Transferposition (6) entlang des Kurvenabschnitts (300-1, 300-6) erfolgende Bewegung einer ersten der Dokumententrägereinrichtungen (4a) so zeitlich versetzt vor einer Bewegung einer unmittelbar nachfolgenden zweiten der Dokumententrägereinrichtungen (4b) im Rahmen der Hin-Bewegung von der zweiten Zwischenposition (19) aus über die erste Zwischenposition (18) hin zur Transferposition (6) auszuführen, dass die zweite Dokumententrägereinrichtung (4b) dabei die erste Zwischenposition (18) erst erreichen kann, wenn die erste Dokumententrägereinrichtung (4a) diese bereits wieder verlassen hat.

9. Vorrichtung (1) nach einem der vorausgehenden Ansprüche, wobei die Vorrichtung (1) des Weiteren konfiguriert ist, die Verfahrbewegungen der Dokumententrägereinrichtungen (4a;4b) getaktet gemäß einem gemeinsamen Systemtakt (t1 bis t3) auszuführen, wobei jede Bahnkurve in zumindest drei Bahnabschnitte (100-1a,b;100-2; 100-3a,b) unterteilt wird und jeweils einer oder zwei aufeinanderfolgende Bahnabschnitte je einzelnen Takt (t1, t2, t3) des Systemtakts durchlaufen werden.

10. Vorrichtung (1) nach einem der vorausgehenden Ansprüche, wobei die Vorrichtung (1) des Weiteren konfiguriert ist, die Verfahrbewegungen der Dokumententrägereinrichtungen (4a;4b) entlang ihrer jeweiligen Bahnkurve periodisch auszuführen, so dass die zeitlich versetzten Verfahrbewegungen der verschiedenen Dokumententrägereinrichtungen (4a;4b) zueinander phasenversetzt verlaufen.

11. Vorrichtung (1) nach einem der vorausgehenden Ansprüche, wobei die Vorrichtung (1) des Weiteren so konfiguriert ist, dass die Bahnkurven von zumindest zwei der Dokumententrägereinrichtungen (4a;4b) im Wirkbereich (2a) zusammenfallen, so dass die Personalisierung von durch diese Dokumententrägereinrichtungen (4a;4b) getragenen Dokumenten (D) am gleichen Ort bzw. im gleichen Ortsbereich innerhalb des Wirkbereichs (2a) der Personalisierungseinrichtung (2) stattfindet.

12. Vorrichtung (1) nach Anspruch 11, wobei die Vorrichtung (1) des Weiteren so konfiguriert ist, dass die Bahnkurven von zumindest zwei der Dokumententrägereinrichtungen (4a;4b), zumindest im Wesentlichen, insgesamt zusammenfallen.

13. Vorrichtung (1) nach einem der vorausgehenden Ansprüche, wobei die Bahnkurve zumindest einer der Dokumententrägereinrichtungen (4a;4b) so festgelegt ist, dass beim Betrieb der Vorrichtung (1) diese Bahnkurve einen je Bahnkurvendurchlauf mehrfach durchlaufenen Kurvenabschnitt (100-2) aufweist, der durch den Wirkbereich (2a) verläuft, wobei bei zumindest zwei dieser Durchläufe durch den Kurvenabschnitt (100-2) während eines selben Bahnkurvendurchlaufs jeweils eine Personalisierung eines durch die Dokumententrägereinrichtung (4a;4b) aufgenommenen Dokuments durch die Personalisierungseinrichtung erfolgt, während sich dabei die Dokumententrägereinrichtung (4a;4b) im Wirkbereich (2a) befindet.

14. Vorrichtung (1) nach einem der vorausgehenden Ansprüche, des Weiteren aufweisend:
eine entlang der jeweiligen Bahnkurven der Dokumententrägereinrichtungen (4a;4b) dem Wirkbereich (2a) der Personalisierungseinrichtung (2) jeweils vorgelagerte Inspektionseinrichtung (16a) zum Detektieren der Lage eines von einer Dokumententrägereinrichtung (4a;4b) aufgenommenen Dokuments (D) bezüglich dieser Dokumententrägereinrichtung (4a;4b) und zur Bestimmung und Übermittlung zumindest eines diese Lage kennzeichnenden Lageparameters;
wobei die Personalisierungseinrichtung (2) konfiguriert ist, auf Basis von diesem zumindest einen Lageparameter eine Selbstkalibrierung zur Kompensation von etwaigen auf Basis des zumindest einen Lageparameters bestimmten Ausrichtungsabweichungen zwischen dem Dokument (D) und der Personalisierungseinrichtung (2) vorzunehmen, um nachfolgend auf Basis dieser Selbstkalibrierung das Dokument (D) unabhängig von seiner relativen Lage bezüglich der es tragenden Dokumententrägereinrichtung (4a;4b) mit einer Personalisierung zu versehen.

15. Vorrichtung (1) nach Anspruch 14, wobei die Personalisierungseinrichtung (2) des Weiteren konfiguriert ist:
das Dokument (D) durch Bedrucken zu personalisieren; und
im Rahmen der Selbstkalibrierung eine Anpassung eines Soll-Drucklayouts für eine durch Bedrucken auf das Dokument (D) aufzubringende Personalisierung mittels einer von dem zumindest einen Lageparameter abhängigen Transformation in ein tatsächlich zu druckendes, lagekompensiertes Drucklayout durchzuführen.

16. Vorrichtung (1) nach Anspruch 14 oder 15, wobei die Personalisierungseinrichtung (2) des Weiteren konfiguriert ist:
das Dokument (D) durch Laserbehandlung zu personalisieren; und
im Rahmen der Selbstkalibrierung eine Anpassung eines Soll-Laserbehandlungslayouts für eine durch die Laserbehandlung auf das Dokument (D) aufzubringende Personalisierung mittels einer von dem zumindest einen Lageparameter abhängigen Transformation in ein tatsächlich zu erzeugendes, lagekompensiertes Laserbehandlungslayout durchzuführen.

17. Vorrichtung (1) nach einem der vorausgehenden Ansprüche, wobei zumindest eine der Dokumententrägereinrichtungen (4a;4b) eine Fixiereinrichtung (14, 14a, 14b) zum Fixieren eines durch diese Dokumententrägereinrichtung (4a;4b) getragenen Dokuments (D) während des Durchlaufens ihrer Bahnkurve aufweist.

18. Vorrichtung (1) nach Anspruch 17, wobei:
die Dokumententrägereinrichtung (4a;4b) eine Kavität (9) zur zumindest teilweisen Aufnahme des Dokuments (D) aufweist; und
die Fixiereinrichtung als Klemmvorrichtung (10) ausgebildet ist, die so konfiguriert ist, dass sie im Betrieb zum Fixieren des Dokuments in der Kavität (9) das Dokument (D) zumindest von einer Seite her temporär mit einem Druck beaufschlagt, um das Dokument (D) gegen eine gegenüberliegende Innenwand der Kavität (9) zu pressen und es dadurch zu fixieren.

19. Vorrichtung (1) nach Anspruch 18, wobei die Klemmvorrichtung (10) ausgebildet ist, den Druck zur temporären Beaufschlagung des Dokuments zum Zwecke seiner Fixierung auf pneumatischem Wege bereitzustellen.

20. Vorrichtung (1) nach Anspruch 19, wobei die Klemmvorrichtung (10) eine pneumatische Druckkammer (14) aufweist, die konfiguriert ist, an der Transferposition (6) unter Druck befüllt zu werden und während die zugehörige Dokumententrägereinrichtung die Bahnkurve außerhalb der Transferposition (6) durchläuft, ohne externe Zuführung von pneumatischem Druck das Dokument (D) zum Zwecke seiner Fixierung mittels der Klemmvorrichtung (10) mit pneumatischem Druck zu beaufschlagen.

21. Vorrichtung (1) nach Anspruch 18, wobei die Klemmvorrichtung (10; 10a, 10b) mit einem als Teil der Dokumententrägereinrichtung vorgesehenen Fixiereinrichtung (20) gekoppelt ist, die konfiguriert ist, die Stellung der Klemmvorrichtung (10; 10a, 10b) lösbar zu arretieren, wenn diese zum Fixieren des Dokuments (D) unter Druck auf dieses gepresst wird.

22. Vorrichtung (1) nach einem der vorausgehenden Ansprüche, wobei zumindest eine der Dokumententrägereinrichtungen (4a;4b) eine Ausrichtungseinrichtung (12a,b und 13a,b) zum Ausrichten eines durch diese Dokumententrägereinrichtung (4a;4b) aufgenommenen Dokuments (D) gemäß einer vorbestimmten Soll-Ausrichtung aufweist.

23. Vorrichtung (1) nach einem der vorausgehenden Ansprüche, wobei zumindest eine der Dokumententrägereinrichtungen (4a;4b) ein Gehäuse (8) aufweist, in dem sich eine Kavität (9) zur zumindest teilweisen Aufnahme des Dokuments (D) befindet, wobei das Gehäuse (8) zumindest eine Gehäuseaussparung (11c) aufweist, die so konfiguriert ist, dass durch sie hindurch eine Personalisierung des Dokuments mittels der Personalisierungseinrichtung (2) ermöglicht ist, wenn sich das Dokument im Wirkbereich (2a) befindet.

24. Vorrichtung (1) nach Anspruch 23, wobei das Gehäuse (8) zumindest zwei zueinander benachbarte und durch einen Zwischensteg voneinander separierte Gehäuseaussparungen (11c) aufweist, die jeweils so konfiguriert sind, dass durch sie hindurch eine Personalisierung eines von der jeweiligen Gehäuseaussparung (11c) freigelegten Teils des Dokuments mittels der Personalisierungseinrichtung (2) ermöglicht ist, wenn sich das Dokument im Wirkbereich (2a) befindet.

25. Vorrichtung (1) nach Anspruch 23 oder 24, des Weiteren aufweisend eine Niederhaltereinrichtung, die konfiguriert ist, temporär, wenn sich die Dokumententrägereinrichtung (4a;4b) an der Transferposition (6) befindet, durch deren zumindest eine Gehäuseaussparung (11c) hindurch eine Führungskraft auf das Dokument auszuüben, um dieses zumindest stellenweise niederzuhalten, während es gerade in die Kavität (9) des Gehäuses (8) aufgenommen oder daraus ausgegeben wird.

26. Verfahren zum Personalisieren von Dokumenten (D), wobei das Verfahren aufweist:
Aufnehmen eines zu personalisierenden Dokuments durch eine von mehreren Dokumententrägereinrichtungen (4a;4b) einer Vorrichtung (1) zum Personalisieren von Dokumenten (D), wobei das Aufnehmen an einer für alle Dokumententrägereinrichtungen (4a;4b) gleichen Transferposition (6) der Vorrichtung (1) erfolgt;
Verfahren der Dokumententrägereinrichtung mit dem durch sie aufgenommenen Dokument (D) zu dessen Personalisierung in den Wirkbereich (2a) einer Personalisierungseinrichtung (2) der Vorrichtung (1); und
Versehen des Dokuments, wenn es sich im Wirkbereich (2a) der Personalisierungseinrichtung (2) befindet, mit ihm zugeordneten Personalisierungsinformationen;
Verfahren der Dokumententrägereinrichtung mit dem durch sie aufgenommenen Dokument (D) nach dessen Personalisierung zurück zu der Transferposition (6),
um es dort von der Dokumententrägereinrichtung auszugeben, während bereits eine weitere der Dokumententrägereinrichtungen (4a;4b) mit einem weiteren,
durch sie aufgenommenen Dokument (D) ihre Bahnkurve zur Personalisierung dieses weiteren Dokuments durchläuft;
wobei:
jede der Dokumententrägereinrichtungen (4a;4b) jeweils entlang einer jeweils zugeordneten geschlossenen schleifenförmigen Bahnkurve zwischen der Transferposition (6), dem Wirkbereich (2a) und wiederum der Transferposition (6) verfahren wird;
die Verfahrbewegung jeder der einzelnen Dokumententrägereinrichtungen (4a;4b) entlang von ihrer Bahnkurve so zeitlich versetzt zur jeweiligen gleichsinnigen Verfahrbewegung jeder anderen Dokumententrägereinrichtung erfolgt, dass die Dokumententrägereinrichtungen (4a;4b) bei ihren jeweiligen Verfahrbewegungen entlang der Bahnkurve nicht miteinander kollidieren;
Steuern der Vorrichtung (1) durch eine Steuerungseinrichtung (7), und
Detektieren an einem oder mehreren bestimmten Punkten entlang der jeweiligen Bahnkurven einen oder mehrere aktuelle Bewegungsparameter der Dokumententrägereinrichtungen (4a;4b) und Übermitteln der einen oder mehreren aktuellen Bewegungsparameter durch eine Sensoreinrichtung (7a) an die Steuerungseinrichtung (7);
wobei das Steuern der Vorrichtung (1) durch die Steuerungseinrichtung (7) in Abhängigkeit von diesen jeweiligen Bewegungsparametern erfolgt;
Variieren der Bahnkurve durch die Verfahreinrichtung (3a,3b) zumindest einer der Dokumententrägereinrichtungen (4a;4b) in Abhängigkeit von einer entsprechenden auf den Bewegungsparametern basierenden Ansteuerung durch die Steuerungseinrichtung (7).

## Claims

1. A device (1) for personalizing documents (D), wherein the device (1) comprises:
a personalization device (2) for applying personalization information to a document to be personalized, which document is located in an operating region (2a) of the personalization device (2), the personalization information being associated with the document to be personalized;
a conveying device (3a, 3b) which comprises at least two movable document carrier devices (4a; 4b), each of which is configured:
to receive a document (D) to be personalized at a transfer position (6) of the device (1) that is the same for all document carrier devices (4a; 4b);
to move the document (D) received, into the operating region (2a) of the personalization device (2) for the purpose of being personalized; and
to move the document (D) received, after its personalization, back to the transfer position (6) and to discharge it there;
wherein the conveying device (3a, 3b) is configured, during its operation, to convey each of the document carrier devices (4a; 4b) along a respective associated path curve in the shape of a closed loop between the transfer position (6), the operating region (2a) and, in turn, the transfer position (6), wherein the conveying movement of each of the individual document carrier devices (4a; 4b) along their path curve is carried out in a temporally staggered manner with respect to the respective conveying movement of each of the other document carrier devices (4a; 4b) in the same direction in such a way that the document carrier devices (4a; 4b) do not collide with each other during the course of their respective conveying movements along the path curve;.
a control device (7) for controlling the device (1), and
a sensor device (7a) which is configured to detect, at one or more particular points along the respective path curves, one or more current movement parameters of the document carrier devices (4a; 4b) and to communicate these to the control device (7);
wherein the control device (7) is configured to control the device (1) as a function of these respective movement parameters,
wherein the conveying device (3a, 3b) is arranged to vary the path curve of at least one of the document carrier devices (4a; 4b) as a function of a corresponding control, by the control device (7), on the basis of the movement parameters.

2. The device (1) in accordance with claim 1, further comprising a transport device (5) which is arranged to feed a document (D) to be personalized to the transfer position (6) along a transport path (5a, 5b), for receiving the same by one of the document carrier devices (4a; 4b), and to convey, away from the transfer position (6), a document (D) which has already been personalized by the personalization device (2) and which has been discharged at the transfer position (6) by one of the document carrier devices (4a; 4b).

3. The device (1) in accordance with claim 2, wherein the conveying device (3a, 3b) comprises a respective conveying unit (3a; 3b) on both sides of the transport path (5a, 5b) for conveying at least one of the document carrier devices (4a; 4b) along their respective path curve.

4. The device (1) in accordance with any one of the preceding claims, wherein the device (1) is further configured to carry out the respective conveying movements of the document carrier device (4a; 4b) along their respective path curves in such a way that an intermediate stop takes place at least at the transfer position (6).

5. The device (1) in accordance with any one of the preceding claims, wherein the time offset of the movements of the document carrier devices (4a; 4b) along their respective path curve is determined in such a way that, at the point in time at which one of the document carrier devices (4a; 4b) is located at the transfer position (6), another of the document carrier devices (4a; 4b) is at the same time located in the operating region (2a) of the personalization device (2).

6. The device (1) in accordance with any one of the preceding claims, wherein the device (1) is further configured:
when one of the document carrier devices (4a; 4b) is located at the transfer position (6), to discharge a document (D) which is currently carried by this document carrier device (4a; 4b) and which has already previously been personalized by the personalization device (2), and, in its place, to pick up, into that document carrier device (4a; 4b) a further document yet to be personalized by the personalization device (2) before that document carrier device (4a; 4b) continues its movement for a new traversal of its path curve.

7. The device (1) in accordance with any one of the preceding claims, wherein the path curve of at least one of the document carrier devices (4a; 4b) is determined in such a way that, during operation of the device (1), this path curve has a curve portion (200-1, 200-5; 300-1, 300-6) between the transfer position (6) and a first intermediate position (18) which curve portion is traversed twice per traversal of the path curve, wherein this curve portion (200-1, 200-5; 3001, 300-6) is traversed, on the one hand, in the course of an away movement of this document carrier device from the transfer position (6) to the first intermediate position (18) and, on the other hand, offset in time with respect thereto and in the opposite direction in the course of a toward movement of the document carrier device (4a; 4b) from the first intermediate position (18) to the transfer position (6), during the traversal, in the same direction, of the path curve in the shape of a loop by this document carrier device (4a; 4b).

8. The device (1) in accordance with claim 7, wherein:
the path curve of the at least one document carrier device further comprises a second intermediate position (19) which is located between the operating region (2a) and the first intermediate position (18); and
the device (1) is further configured to carry out a movement of a first one of the document carrier devices (4a), which movement takes place in the course of the away movement from the transfer position (6) along the curve portion (300-1, 300-6), with a time offset before a movement of a directly following second one of the document carrier devices (4b) in the course of the toward movement from the second intermediate position (19) via the first intermediate position (18) to the transfer position (6), in such a way that, in this context, the second document carrier device (4b) cannot reach the first intermediate position (18) until the first document carrier device (4a) has already left the first intermediate position again.

9. The device (1) in accordance with any one of the preceding claims, wherein the device (1) is further configured to carry out the conveying movements of the document carrier devices (4a; 4b) in a clocked manner in accordance with a common system clock (t1 to t3), wherein each path curve is subdivided into at least three path portions (100-1a, b; 100-2; 100-3a, b) and one or two successive path portions are traversed per individual clock cycle (t1, t2, t3) of the system clock.

10. The device (1) in accordance with any one of the preceding claims, wherein the device (1) is further configured to carry out the conveying movements of the document carrier devices (4a; 4b) along their respective path curve in a periodical manner, so that the conveying movements of the various document carrier devices (4a; 4b), which conveying movements are offset in time, are out of phase with each other.

11. The device (1) in accordance with any one of the preceding claims, wherein the device (1) is further configured in such a way that the path curves of at least two of the document carrier devices (4a; 4b) coincide in the operating region (2a), so that the personalization of documents (D) carried by these document carrier devices (4a; 4b) takes place at the same location or in the same local area within the operating region (2a) of the personalization device (2).

12. The device (1) in accordance with claim 11, wherein the device (1) is further configured in such a way that the path curves of at least two of the document carrier devices (4a; 4b) coincide in their entirety, at least substantially.

13. The device (1) in accordance with any one of the preceding claims, wherein the path curve of at least one of the document carrier devices (4a; 4b) is defined in such a way that, in the course of the operation of the device (1), this path curve has a curve portion (100-2) which is traversed several times per traversal of the path curve and which runs through the operating region (2a), wherein a respective personalization of a document picked up by the document carrier device (4a; 4b) is carried out by the personalization device during at least two of these traversals of the curve portion (100-2) during one and the same traversal of the path curve while the document carrier device (4a; 4b) is located in the operating region (2a).

14. The device (1) in accordance with any one of the preceding claims, further comprising:
an inspection device (16a) which is located along the respective path curves of the document carrier devices (4a; 4b) and upstream of the respective operating region (2a) of the personalization device (2), the inspection device being provided for detecting the position of a document (D) picked up by a document carrier device (4a; 4b) with respect to this document carrier device (4a; 4b) and for determining and transmitting at least one position parameter which characterizes this position;
wherein the personalization device (2) is configured to carry out a self-calibration on the basis of this at least one position parameter in order to compensate for any deviations in the alignment between the document (D) and the personalization device (2) as determined on the basis of the at least one position parameter, in order subsequently to apply, on the basis of this self-calibration, a personalization to the document (D) irrespective of its relative position with respect to the document carrier device (4a; 4b) carrying it.

15. The device (1) in accordance with claim 14, wherein the personalization device (2) is further configured:
to personalize the document (D) by applying printing to it; and
to carry out, within the framework of the self-calibration, an adjustment of a target print layout for a personalization to be applied to the document (D) by printing thereon, by means of a transformation which is dependent on the at least one position parameter, into an actual position-compensated print layout to be printed.

16. The device (1) in accordance with claim 14 or 15, wherein the personalization device (2) is further configured:
to personalize the document (D) by laser treatment; and
to carry out, within the framework of the self-calibration, an adjustment of a target laser treatment layout for a personalization to be applied to the document (D) by the laser treatment, by means of a transformation which is dependent on the at least one position parameter, into an actual position-compensated laser treatment layout to be generated.

17. The device (1) in accordance with any one of the preceding claims, wherein at least one of the document carrier devices (4a; 4b) comprises a fixing device (14, 14a, 14b) for fixing a document (D) carried by said document carrier device (4a; 4b) during the traversal of its path curve.

18. The device (1) in accordance with claim 17, wherein:
the document carrier device (4a; 4b) has a cavity (9) for at least partially receiving the document (D); and
the fixing device is constructed in the form of a clamping device (10) which is configured in such a way that, in operation, for the purpose of fixing the document in the cavity (9), it temporarily applies a pressure to the document (D) at least from one side in order to press the document (D) against an opposite inner wall of the cavity (9) and thereby to fix it.

19. The device (1) in accordance with claim 18, wherein the clamping device (10) is configured to provide the pressure for temporarily applying pressure to the document for the purpose of fixing it in place by pneumatic means.

20. The device (1) in accordance with claim 19, wherein the clamping device (10) comprises a pneumatic pressure chamber (14) which is configured to be filled at the transfer position (6) under pressure and, while the associated document carrier device traverses the path curve outside the transfer position (6), to apply pneumatic pressure to the document (D) for the purpose of fixing it by means of the clamping device (10), without external supply of pneumatic pressure.

21. The device (1) in accordance with claim 18, wherein the clamping device (10; 10a, 10b) is coupled to a fixing device (20) provided as part of the document carrier device, which fixing device (20) is configured to releasably lock the position of the clamping device (10; 10a, 10b) when the latter is pressed onto the document (D) under pressure in order to fix the document (D).

22. The device (1) in accordance with any one of the preceding claims, wherein at least one of the document carrier devices (4a; 4b) comprises an alignment device (12a, b and 13a, b) for aligning a document (D) which has been picked up by this document carrier device (4a; 4b) in accordance with a predetermined target alignment.

23. The device (1) in accordance with any one of the preceding claims, wherein at least one of the document carrier devices (4a; 4b) comprises a housing (8) in which there is a cavity (9) in order to at least partially receive the document (D), wherein the housing (8) has at least one housing recess (11c) which is configured in such a way that a personalization of the document by means of the personalization device (2) is possible through the at least one housing recess (11c) when the document is located in the operating region (2a).

24. The device (1) in accordance with claim 23, wherein the housing (8) has at least two housing recesses (11c) which are adjacent to one another and which are separated from one another by an intermediate web, each of which housing recesses (11c) are configured in such a way that a personalization, by means of the personalization device (2), of a part of the document exposed by the respective housing recess (11c) is made possible through the housing recesses (11c) when the document is located in the operating region (2a).

25. The device (1) in accordance with claim 23 or 24, further comprising a hold-down device which is configured to apply temporarily, when the document carrier device (4a; 4b) is located at the transfer position (6), a guiding force to the document through the at least one housing recess (11c) thereof in order to hold down the document at least in some places while it is being received into, or discharged from, the cavity (9) of the housing (8).

26. A method of personalizing documents (D), wherein the method comprises:
picking up a document to be personalized by one of a plurality of document carrier devices (4a; 4b) of a device (1) for personalizing documents (D), wherein the picking up takes place at a transfer position (6) of the device (1) which is the same for all document carrier devices (4a; 4b);
conveying the document carrier device with the document (D) picked up by the document carrier device (4a; 4b) into the operating region (2a) of a personalization device (2) of the device (1) for the purpose of personalizing the document (D); and
applying, to the document, when it is located in the operating region (2a) of the personalization device (2), personalization information associated with the document;
conveying the document carrier device with the document (D) picked up by the document carrier device (4a; 4b) back to the transfer position (6) after it has been personalized, in order to discharge it there from the document carrier device, while a further one of the document carrier devices (4a; 4b) with a further document (D) picked up by the further document carrier device (4a; 4b) is already traversing its path curve for the purpose of personalizing this further document;
wherein:
each of the document carrier devices (4a; 4b) is respectively conveyed along a respective associated path curve in the shape of a closed loop between the transfer position (6), the operating region (2a) and, in turn, the transfer position (6);
the conveying movement of each of the individual document carrier devices (4a; 4b) along their path curve is carried out in a temporally staggered manner with respect to the respective conveying movement of each of the other document carrier devices in the same direction in such a way that the document carrier devices (4a; 4b) do not collide with each other during the course of their respective conveying movements along the path curve;
controlling the device (1) through a controlling device (7), and
detecting at one or more particular points along the respective path curves, one or more current movement parameters of the document carrier devices (4a; 4b) and to communicate these through a sensor device (7a) to the control device (7);
wherein the control device (7) is configured to control the device (1) as a function of these respective movement parameters,
varying the path curve through the conveying device (3a, 3b) of at least one of the document carrier devices (4a; 4b) as a function of a corresponding control, by the control device (7), on the basis of the movement parameters.

## Revendications

1. Dispositif (1) de personnalisation de documents (D), dans lequel le dispositif (1) présente :
un système de personnalisation (2) destiné à doter un document à personnaliser, lequel se trouve dans une zone active (2a) du système de personnalisation (2),
d'informations de personnalisation qui lui sont associées ; un système d'ajustement (3a, 3b) avec au moins deux systèmes de support de document (4a ; 4b) pouvant être ajustés, dont chacun est configuré :
- pour recevoir un document (D) à personnaliser sur une position de transfert (6) du dispositif (1) identique à tous les systèmes de support de document (4a ; 4b) ;
- pour déplacer le document (D) reçu pour sa personnalisation dans la zone active (2a) du système de personnalisation (2) ; et
- pour déplacer le document (D) reçu après sa personnalisation en retour vers la position de transfert (6) et l'y délivrer ;
dans lequel le système d'ajustement (3a ; 3b) est configuré pour ajuster lors de son fonctionnement les systèmes de support de document (4a ; 4b) respectivement le long d'une trajectoire en forme de boucle fermée respectivement associée entre la position de transfert (6), la zone active (2a) et à nouveau la position de transfert (6), dans lequel le déplacement d'ajustement de chacun des divers systèmes de support de document (4a ; 4b) le long de leur trajectoire est effectué de manière décalée dans le temps par rapport au déplacement d'ajustement respectif dans le même sens de chaque autre des systèmes de support de document (4a ; 4b) de telle sorte que les systèmes de support de document (4a ; 4b) n'entrent pas en collision les uns avec les autres le long de la trajectoire lors de leurs déplacements d'ajustement respectifs ;
un système de commande (7) destiné à commander le dispositif (1), et
un système de capteur (7a), qui est configuré pour détecter, sur un ou plusieurs points définis le long des trajectoires respectives, un ou plusieurs paramètres de déplacement présents des systèmes de support de document (4a ; 4b) et les transmettre au système de commande (7) ;
dans lequel le système de commande (7) est configuré pour commander le dispositif (1) en fonction desdits paramètres de déplacement respectifs,
dans lequel le système d'ajustement (3a, 3b) est mis au point pour faire varier par le système de commande (7) la trajectoire d'au moins un des systèmes de support de document (4a ; 4b) en fonction d'un pilotage correspondant se basant sur les paramètres de déplacement.

2. Dispositif (1) selon la revendication 1, présentant par ailleurs un système de transport (5), qui est mis au point pour amener le long d'un tronçon de transport (5a, 5b) un document (D) à personnaliser à la position de transfert (6) pour le faire recevoir par un des systèmes de support de document (4a ; 4b) et pour retirer un document (D) déjà personnalisé par le système de personnalisation (2) et délivré par un des systèmes de support de document (4a ; 4b) sur la position de transfert (6) de la position de transfert (6).

3. Dispositif (1) selon la revendication 2, dans lequel le système d'ajustement (3a, 3b) présente de part et d'autre du tronçon de transport (5a, 5b) respectivement une unité d'ajustement (3a ; 3b) destinée à ajuster au moins un des systèmes de support de document (4a ; 4b) le long de leur trajectoire respective.

4. Dispositif (1) selon l'une quelconque des revendications précédentes, dans lequel le dispositif (1) est configuré par ailleurs pour mettre en oeuvre les déplacements d'ajustement respectifs des systèmes de support de document (4a ; 4b) le long de leur trajectoire respective de telle sorte qu'un arrêt provisoire a lieu au moins sur la position de transfert (6).

5. Dispositif (1) selon l'une quelconque des revendications précédentes, dans lequel le décalage dans le temps des déplacements des systèmes de support de document (4a ; 4b) le long de leur trajectoire respective est fixé de telle sorte qu'au moment, où un des systèmes de support de document (4a ; 4b) se trouve sur la position de transfert (6), un autre des systèmes de support de document (4a ; 4b) se trouve dans le même temps dans la zone active (2a) du système de personnalisation (2).

6. Dispositif (1) selon l'une quelconque des revendications précédentes, dans lequel le dispositif (1) est configuré par ailleurs :
pour, lorsqu'un des systèmes de support de document (4a ; 4b) se trouve sur la position de transfert (6), délivrer un document (D) supporté actuellement par le système de support de document (4a ; 4b) et déjà personnalisé temporairement par le système de personnalisation (2) et pour recevoir à cet emplacement un document supplémentaire différent à personnaliser encore par le système de personnalisation (2) dans ledit système de support de document (4a ; 4b)avant que celui-ci ne poursuive son déplacement pour traverser à nouveau sa trajectoire.

7. Dispositif (1) selon l'une quelconque des revendications précédentes, dans lequel la trajectoire d'au moins un des systèmes de support de document (4a ; 4b) est fixée de telle sorte que lors du fonctionnement du dispositif (1), ladite trajectoire présente une section de trajectoire (200-1, 200-5 ; 300-1, 300-6) traversée à deux reprises selon le passage de trajectoire entre la position de transfert (6) et une première position intermédiaire (18), dans lequel ladite section de trajectoire (200-1, 200-5 ; 3001, 300-6) est traversée d'une part dans la cadre d'un déplacement d'éloignement dudit système de support de document de la position de transfert (6) vers la première position intermédiaire (18) et d'autre part de manière décalée dans le temps par rapport à celui-ci et dans une direction opposée dans le cadre d'un déplacement de rapprochement du système de support de document (4a ; 4b) depuis la première position intermédiaire (18) vers la position de transfert (6) pendant le passage dans le même sens de la trajectoire en forme de boucle par ledit système de support de document (4a ; 4b).

8. Dispositif (1) selon la revendication 7, dans lequel :
la trajectoire de l'au moins un système de support de document présente par ailleurs une deuxième position intermédiaire (19) placée entre la zone active (2a) et la première position intermédiaire (18) ; et
le dispositif (1) est configuré par ailleurs pour exécuter un déplacement, effectué dans le cadre du déplacement d'éloignement depuis la position de transfert (6) le long de la section de trajectoire (300-1 ; 300-6), d'un premier des systèmes de support de document (4a) de manière décalée dans le temps avant un déplacement d'un deuxième des systèmes de support de document (4b) qui suit directement dans le cadre du déplacement de rapprochement depuis la deuxième position intermédiaire (19) en passant par la première position intermédiaire (18) jusqu'à la position de transfert (6) de telle sorte que le deuxième système de support de document (4b) peut atteindre dans ce cadre la première position intermédiaire (18) seulement lorsque le premier système de support de document (4a) a déjà quitté à nouveau celle-ci.

9. Dispositif (1) selon l'une quelconque des revendications précédentes, dans lequel le dispositif (1) est configuré par ailleurs pour exécuter les déplacements d'ajustement des systèmes de support de document (4a ; 4b) de manière cadencée selon une cadence de système (t1 à t3) commune, dans lequel chaque trajectoire est divisée en au moins trois sections de trajectoire (100-1a,b ; 100-2 ; 100-3a,b) et respectivement une ou deux sections de trajectoire se suivant l'une l'autre sont traversées par cadence (t1, t2, t3) individuelle de la cadence de système.

10. Dispositif (1) selon l'une quelconque des revendications précédentes, dans lequel le dispositif (1) est configuré en outre pour exécuter périodiquement les déplacements d'ajustement des systèmes de support de document (4a ; 4b) le long de leur trajectoire respective de telle sorte que les déplacements d'ajustement décalés dans le temps des différents systèmes de support de document (4a ; 4b) s'étendent de manière déphasée les uns par rapport aux autres.

11. Dispositif (1) selon l'une quelconque des revendications précédentes, dans lequel le dispositif (1) est configuré par ailleurs de telle sorte que les trajectoires d'au moins deux des systèmes de support de document (4a ; 4b) coïncident dans la zone active (2a) de telle sorte que la personnalisation de documents (D) supportés par lesdits systèmes de support de document (4a ; 4b) a lieu sur le même emplacement ou dans la même zone d'emplacement à l'intérieur de la zone active (2a) du système de personnalisation (2).

12. Dispositif (1) selon la revendication 11, dans lequel le dispositif (1) est configuré par ailleurs de telle sorte que les trajectoires d'au moins deux des systèmes de support de document (4a ; 4b) coïncident globalement au moins sensiblement.

13. Dispositif (1) selon l'une quelconque des revendications précédentes, dans lequel la trajectoire d'au moins un des systèmes de support de document (4a ; 4b) est fixée de telle sorte que lors du fonctionnement du dispositif (1), cette trajectoire présente une section de trajectoire (100-2) traversée à maintes reprises par passage de trajectoire, qui s'étend à travers la zone active (2a), dans lequel respectivement une personnalisation d'un document reçu par le système de support de document (4a ; 4b) est effectuée par le système de personnalisation lors d'au moins deux desdits passages à travers la section de courbe (100-2) pendant un même passage de trajectoire tandis que le système de support de document (4a ; 4b) se trouve dans la zone active (2a).

14. Dispositif (1) selon l'une quelconque des revendications précédentes, présentant par ailleurs :
un système d'inspection (16a) monté en mont respectivement de la zone active (2a) du système de personnalisation (2) le long des trajectoires respectives des systèmes de support de document (4a ; 4b), destiné à détecter la position d'un document (D) reçu par un système de support de document (4a ; 4b) par rapport audit système de support de document (4a ; 4b) et destiné à définir et à transférer au moins un paramètre de position caractérisant ladite position ;
dans lequel le système de personnalisation (2) est configuré pour réaliser, sur la base dudit au moins un paramètre de position, un auto-étalonnage destiné à la compensation d'écarts d'orientation éventuels définis sur la base de l'au moins un paramètre de position entre le document (D) et le système de personnalisation (2) pour doter d'une personnalisation, par la suite, sur la base dudit auto-étalonnage, le document (D) indépendamment de sa position relative par rapport au système de support de document (4a ; 4b) le supportant.

15. Dispositif (1) selon la revendication 14, dans lequel le système de personnalisation (2) est configuré par ailleurs :
pour personnaliser le document (D) par impression ; et
pour mettre en oeuvre, dans le cadre de l'auto-étalonnage, une adaptation d'une mise en page d'impression théorique pour une personnalisation à appliquer par impression sur le document (D) au moyen d'une transformation dépendant de l'au moins un paramètre de position en une mise en page d'impression à position compensée à imprimer réellement.

16. Dispositif (1) selon la revendication 14 ou 15, dans lequel le système de personnalisation (2) est configuré par ailleurs :
pour personnaliser le document (D) par traitement laser ; et
pour mettre en oeuvre, dans le cadre de l'auto-étalonnage, une adaptation d'une mise en page de traitement laser théorique pour une personnalisation à appliquer par traitement laser sur le document (D) au moyen d'une transformation dépendant de l'au moins un paramètre de position en une mise en page de traitement laser à position compensée à produire réellement.

17. Dispositif (1) selon l'une quelconque des revendications précédentes, dans lequel au moins un des systèmes de support de document (4a ; 4b) présente un système de fixation (14, 14a, 14b) destiné à fixer un document (D) supporté par ledit système de support de document (4a ; 4b) pendant le passage de sa trajectoire.

18. Dispositif (1) selon la revendication 17, dans lequel :
le système de support de document (4a ; 4b) présente une cavité (9) destinée à recevoir au moins en partie le document (D) ; et
le système de fixation est réalisé en tant que dispositif de serrage (10), qui est configuré de telle sorte que lors du fonctionnement, le document (D) est soumis à l'action d'une pression temporairement au moins depuis un côté pour fixer le document dans la cavité (9) pour presser le document (D) contre une paroi intérieure opposée de la cavité (9) et pour ainsi le fixer.

19. Dispositif (1) selon la revendication 18, dans lequel le dispositif de serrage (10) est réalisé pour fournir la pression à appliquer temporairement sur le document pour les besoins de sa fixation de manière pneumatique.

20. Dispositif (1) selon la revendication 19, dans lequel le dispositif de serrage (10) présente une chambre de pression pneumatique (14), qui est configurée pour être remplie sous pression sur la position de transfert (6) et pour soumettre le document (D) pour les besoins de sa fixation au moyen du dispositif de serrage (10) à l'action d'une pression pneumatique sans apport externe de pression pneumatique pendant que le système de support de document associé traverse la trajectoire à l'extérieur de la position de transfert (6).

21. Dispositif (1) selon la revendication 18, dans lequel le dispositif de serrage (10 ; 10a, 10b) est couplé à un système de fixation (20) prévu en tant que partie du système de support de document, qui est configuré pour arrêter de manière amovible la position du dispositif de serrage (10 ; 10a, 10b) lorsque celui-ci est pressé sur ledit document (D) pour le fixer sous pression.

22. Dispositif (1) selon l'une quelconque des revendications précédentes, dans lequel au moins un des systèmes de support de document (4a ; 4b) présente un système d'orientation (12a, b et 13a, b) destiné à orienter un document (D) reçu par ledit système de support de document (4a ; 4b) selon une orientation théorique prédéfinie.

23. Dispositif (1) selon l'une quelconque des revendications précédentes, dans lequel au moins un des systèmes de support de document (4a ; 4b) présente un boîtier (8), dans lequel se trouve une cavité (9) destinée à recevoir au moins en partie le document (D), dans lequel le boîtier (8) présente au moins un évidement de boîtier (11c), qui est configuré de telle sorte qu'une personnalisation du document est possible à travers celui-ci au moyen du système de personnalisation (2) lorsque le document se trouve dans la zone active (2a).

24. Dispositif (1) selon la revendication 23, dans lequel le boîtier (8) présente au moins deux évidements de boîtier (11c) adjacents l'un par rapport à l'autre et séparés l'un de l'autre par une entretoise intermédiaire, qui sont configurés respectivement de telle sorte qu'une personnalisation d'une partie du document exposée par l'évidement de boîtier (11c) respectif est possible à travers celui-ci au moyen du système de personnalisation (2) lorsque le document se trouve dans la zone active (2a).

25. Dispositif (1) selon la revendication 23 ou 24, présentant par ailleurs un système de maintien, qui est configuré pour exercer temporairement, lorsque le système de support de document (4a ; 4b) se trouve sur la position de transfert (6), à travers son au moins un évidement de boîtier (11c) de part en part une force de guidage sur le document pour maintenir au moins localement celui-ci, tandis qu'il est reçu précisément dans la cavité (9) du boîtier (8) ou qu'il est délivré depuis celle-ci.

26. Procédé de personnalisation de documents (D), dans lequel le procédé présente :
la réception d'un document à personnaliser par un de plusieurs systèmes de support de document (4a ; 4b) d'un dispositif (1) de personnalisation de documents (D), dans lequel la réception est effectuée sur une position de transfert (6) du document (1) identique à tous les systèmes de support de document (4a ; 4b) ;
l'ajustement du système de support de document avec le document (D) reçu par celui-ci aux fins de sa personnalisation dans la zone active (2a) d'un système de personnalisation (2) du dispositif (1) ; et
le fait de doter le document, lorsqu'il se trouve dans la zone active (2a) du système de personnalisation (2), d'informations de personnalisation qui lui sont associées ; l'ajustement du système de support de document avec le document (D) reçu par celui-ci après sa personnalisation à nouveau vers la position de transfert (6) pour l'y délivrer par le système de support de document, tandis qu'un autre des systèmes de support de document (4a ; 4b) traverse déjà avec un autre document (D) reçu par lui sa trajectoire pour la personnalisation dudit autre document ;
dans lequel :
chacun des systèmes de support de document (4a ; 4b) est ajusté respectivement le long d'une trajectoire en forme de boucle fermée associée respectivement entre la position de transfert (6), la zone active (2a) et à nouveau la position de transfert (6) ;
le déplacement d'ajustement de chacun des divers systèmes de support de document (4a ; 4b) le long de sa trajectoire est effectué de manière décalée dans le temps par rapport au déplacement dans le même sens respectif de chaque autre système de support de document que les systèmes de support de document (4a ; 4b) n'entrent pas en collision le long de la trajectoire lors de leurs déplacements d'ajustement respectifs ;
la commande du dispositif (1) par un système de commande (7), et
la détection sur un ou plusieurs points définis le long des trajectoires respectives d'un ou de plusieurs paramètres de déplacement présents des systèmes de support de document (4a ; 4b) et la transmission des un ou plusieurs paramètres de déplacement présents par un système de capteur (7a) au système de commande (7) ;
dans lequel la commande du dispositif (1) par le système de commande (7) est effectuée en fonction desdits paramètres de déplacement respectifs ;
la variation de la trajectoire par le système d'ajustement (3a, 3b) d'au moins un des systèmes de support de document (4a ; 4b) en fonction d'un pilotage correspondant se basant sur les paramètres de déplacement par le système de commande (7).
